# EUROPEAN PATENT SPECIFICATION

(11) **EP 2 447 045 B1**
(45) Date of publication and mention of the grant of the patent: **12.12.2018**
(21) Application number: 11186866.7
(22) Date of filing: 27.10.2011
(51) Int. Cl.: B29C 64/40, B29C 64/112, B33Y 10/00, B33Y 30/00

(54) **Three-dimensional shaping apparatus and three-dimensional shaping method**
Dreidimensionale Formungsvorrichtung und dreidimensionales Formungsverfahren
Procédé de formage tridimensionnel et appareil de formage tridimensionnel

(30) Priority: 01.11.2010 JP 2010245087
(43) Date of publication of application: 02.05.2012
(73) Proprietor: Keyence Corporation, Osaka-shi Osaka 533-8555 (JP)
(72) Inventor: Ikeda, Shigeki, Osaka, 533-8555 (JP); Suzaki, Ryohei, Osaka, 533-8555 (JP)
(74) Representative: Hoffmann Eitle

(56) References cited:
- US-A1- 2005 074 596
- US-A1- 2009 072 447

## Description

### BACKGROUND OF THE INVENTION

### 1. Field of the Invention

The present invention relates to a three-dimensional shaping apparatus, a three-dimensional shaping method, a three-dimensional shaping program for fabricating a stereoscopic shaped object in an ink-jet manner, and a computer-readable recording medium.

### 2. Description of Related Art

There have been known apparatuses which successively laminate resin layers for respective cross sections of a shaped object for performing stereoscopic shaping for forming a shaped object which forms a three-dimensional shaped-object model, wherein the aforementioned respective cross sections are provided by sectioning the shaped object in a plurality of parallel planes.

In the field of rapid prototyping (RP), which is used in prototyping in product developments and the like, there are employed laminate shaping methods which enable three-dimensional shaping. Such laminate shaping methods are adapted to slice a three-dimensional CAD data about a product, create data like laminated thin plates, as original production data, and laminate materials such as powder members, resins, steel plates, paper and the like thereon to create a prototype. As such laminate shaping methods, there are known an ink-jet method, a powder method, an optical shaping method, a sheet lamination method, an extrusion method, and the like. Among these methods, in the ink-jet method, a liquefied material is injected, and then cured to form a layer through irradiation of ultraviolet light (UV), cooling or the like. With such a method, it is possible to apply the principle of an ink-jet printer thereto, which offers the advantage that high definition can be easily realized.

A three-dimensional shaping apparatus of a resin layer-lamination type is adapted to eject a model material and a supporting material onto a shaping plate while performing scanning in XY directions, thereby laminating layers in a height direction for attaining shaping, wherein the model material is to form a final shaped object, and the supporting material is to support protruding portions of the model material and is also to be finally removed therefrom. The model material and the supporting material are formed from resins having properties of being cured by irradiation of ultraviolet light. An ultraviolet-light lamp capable of emitting ultraviolet light is scanned in the XY directions together with the nozzles for ejecting the model material and the supporting material, so that the model material and the supporting material ejected from the nozzles are irradiated with the ultraviolet light to be cured.

Patent Document 1: Japanese Unexamined Patent Publication No. 2003-535712 discloses a three-dimensional shaping apparatus with a print head for ejecting build material on a build plate. US2005/074596 discloses the features of the preamble of claim 1, 2 and 11 respectively.

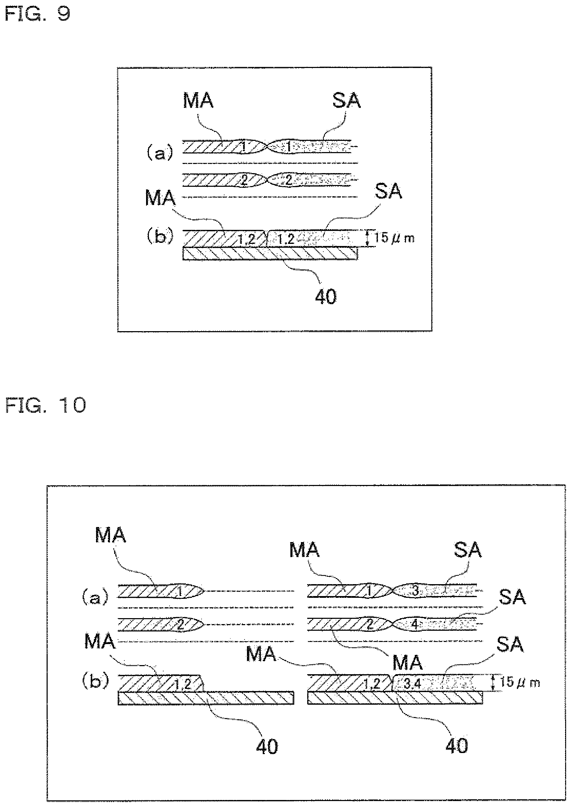

However, conventionally, as illustrated in a plan view of Fig. 10A, the model material MA and the supporting material SA are concurrently ejected through a single scanning (in the X direction), which induces the problem that the model material MA and the supporting material SA are mixed in a state where both the materials are uncured, that is, in liquid states, at the boundary portion between both the materials, as illustrated in a vertical cross-sectional view of Fig. 10B. If the materials are cured in this state, this will induce expansion and color changes at the portion where the materials are mixed with each other, thereby degrading the quality of shaping. Further, this makes it difficult to remove the supporting material. Furthermore, since the ultraviolet-light lamp is structured to be scanned together with the nozzles in general, it is hard to cure the model material and the supporting material immediately after having been ejected from the nozzles. Therefore, the aforementioned problem has become more prominent, with increasing time period for which such a state where these materials are mixed with each other in uncured states.

To cope with such a problem, it is possible to prevent mixture of both the materials in liquid states by ejecting and curing one of the model material and the supporting material at first, and then curing the other one thereof, instead of ejecting the model material and the supporting material at the same time through a single reciprocating scanning. However, this method induces the problem of doubling the shaping time period, in comparison with cases of ejecting the model material MA and the supporting material SA at the same time through a single scanning.

### SUMMARY OF THE INVENTION

The present invention has been made in view of the above conventional problems and mainly aims at providing a three-dimensional shaping apparatus, a three-dimensional shaping method, a three-dimensional shaping program and a computer-readable recording medium which are capable of preventing mixture of a model material and a supporting material at a boundary therebetween while suppressing an increase in processing time periods.

In order to achieve the above object, a three-dimensional shaping apparatus according to one embodiment of the present invention is a three-dimensional shaping apparatus for repeatedly performing operations for ejecting, onto a shaping plate 40, a model material MA and a supporting material SA as shaping materials while performing scanning at least in a single direction, and for curing them to form slices having a predetermined thickness in a height direction, and laminating these slices in the height direction for performing shaping, the model material MA being to form a final shaped object, and the supporting material SA being to support a protruding portion of the model material MA and to be finally removed, the three-dimensional shaping apparatus including: the shaping plate 40 for placing a shaped object thereon; a shaping-material ejection device including a plurality of model-material ejection nozzles 21 for ejecting the model material MA and a plurality of supporting-material ejection nozzles 22 for ejecting the supporting material SA, such that these plurality of nozzles are arranged in a single direction; a curing device 24 for curing the model material MA and the supporting material SA; a head portion 20 including the shaping-material ejection device and the curing device 24; a horizontal driving device for reciprocatingly scanning the head portion 20 in a horizontal direction; a vertical driving device for moving the positions of the head portion 20 and the shaping plate 40 with respect to each other in the height direction; and a control device for controlling driving of the horizontal driving device and the vertical driving device and further for controlling the ejections of the shaping materials by the shaping-material ejection device and the curing by the curing device 24; wherein the control device performs control for causing the horizontal driving device to reciprocatingly scan the head portion 20 in a single direction, further causing the shaping-material ejection device to eject the model material MA and the supporting material SA onto the shaping plate 40, and causing the curing device 24 to cure the model material MA and/or the supporting material SA in at least one of forward and rearward paths in the reciprocating scanning to form the slices, further for moving the positions of the shaping plate 40 and the head portion 20 with respect to each other in the height direction, and for repeating the lamination of the slices to perform shaping, the supporting material SA is ejected in an amount larger than the amount of the model material MA which is ejected, and the supporting material SA can be shaped with a resolution lower than a resolution for the model material MA. Consequently, it is possible to make the time period required for shaping the supporting material shorter than that for the model material, thereby offering the advantage of reduction of the shaping time period by an amount corresponding thereto.

Further, a three-dimensional shaping apparatus according to another embodiment is a three-dimensional shaping apparatus for repeatedly performing operations for ejecting, onto a shaping plate 40, a model material MA and a supporting material SA as shaping materials while performing scanning at least in a single direction, and for curing the materials to form slices having a predetermined thickness in a height direction, and further, laminating these slices in the height direction for performing shaping, the model material MA being to form a final shaped object, and the supporting material SA being to support a protruding portion of the model material MA and to be finally removed, and the three-dimensional shaping apparatus may include: the shaping plate 40 for placing a shaped object thereon; a shaping-material ejection device including a plurality of model-material ejection nozzles 21 for ejecting the model material MA and a plurality of supporting-material ejection nozzles 22 for ejecting the supporting material SA, such that these plurality of nozzles are arranged in a single direction; a curing device 24 for curing the model material MA and the supporting material SA; a head portion 20 including the shaping-material ejection device and the curing device 24; a horizontal driving device for reciprocatingly scanning the head portion 20 in a horizontal direction; a vertical driving device for moving positions of the head portion 20 and the shaping plate 40 with respect to each other in the height direction; and a control device for controlling driving of the horizontal driving device and the vertical driving device and for controlling the ejections of the shaping materials by the shaping-material ejection device and the curing by the curing device 24; wherein the control device performs control for causing the horizontal driving device to reciprocatingly scan the head portion 20 in a single direction, further causing the shaping-material ejection device to eject the model material MA and the supporting material SA onto the shaping plate 40 and causing the curing device 24 to cure the model material MA and/or the supporting material SA in at least one of forward and rearward paths in the reciprocating scanning to form the slices, further for moving the positions of the shaping plate 40 and the head portion 20 with respect to each other in the height direction, and for repeating the lamination of the slices to perform shaping, only the model material MA is ejected and cured during a plurality of reciprocating scannings, thereby laminating a plurality of layers made of the cured model material MA in the height direction, and thereafter, only the supporting material SA is ejected and cured, through a subsequent single reciprocating scanning, to have a height equal to or larger than the height of the plurality of layers made of the model material MA, thereby forming the single slice. Consequently, the model material and the supporting material are ejected at different timings rather than at the same time, which can prevent mixture of the materials at the boundary surface therebetween. Further, by making the amount of the supporting material ejected through a single scanning larger than the amount of the model material ejected therethrough, it is possible to suppress the increase of the shaping time period.

Further, according to yet another embodiment, in the three-dimensional shaping apparatus, the control device is adapted to eject and cure only one of the shaping materials, rather than ejecting the model material MA and the supporting material SA concurrently through the same reciprocating scannings, in lines in which the model material MA and the supporting material SA are to be positioned, in a direction of scanning over the shaped object. Consequently, since the model material and the supporting material are not ejected at the same time through the same reciprocating scannings, and only one of the materials is ejected and cured, it is possible to prevent a situation where both the model material and the supporting material adjacent to each other in the same line have not been cured and are mixed with each other at the boundary surface therebetween, thereby offering the advantage that the boundary surface therebetween can be formed clearly.

Furthermore, according to yet another embodiment, the three-dimensional shaping apparatus may further include a roller portion 25 for pressing the shaping materials ejected onto the shaping plate 40 in a state where the materials have not been cured, for eliminating an excess portion thereof, wherein the shaping materials are ejected to have a height equal to or larger than a height of an amount of offset determined based on an accuracy tolerance in the roller portion 25. Consequently, it is possible to absorb eccentricity and roundness variations in the roller portion, through ejections of the shaping materials.

Furthermore, according to yet another embodiment, the three-dimensional shaping apparatus may further include a roller portion 25 for pressing the shaping materials ejected onto the shaping plate 40 in a state where the materials have not been cured. This enables making the surfaces of the shaping materials even before they have been cured. This also enables eliminating excess portions of the shaping materials.

Furthermore, according to yet another embodiment, in the three-dimensional shaping apparatus, the roller portion 25 may be adapted to be scanned over slices including the model material MA which has been cured and the supporting material SA which has not been cured, and the shaping-material ejection device is adapted to perform ejections such that the uncured supporting material SA has a height larger than that of the cured model material MA by a predetermined amount of offset. Since the supporting material which has not been cured is made to have a height larger than that of the model material having been cured, the roller portion is lifted upwardly by the supporting material, which prevents the roller portion from coming into contact with the cured model material, thereby preventing the roller portion from scraping the cured model material to induce malfunctions therein.

Furthermore, according to yet another embodiment, in the three-dimensional shaping apparatus, the predetermined amount of offset may be determined in consideration of a distribution of positional deviation in the roller portion 25 in the height direction. As described above, since the amount of offset is defined in consideration of tolerances in the roller portion, such as roundness deviation, eccentricity, variations in the position at which it is fixed, it is possible to properly set the height of the supporting material in such a way as to prevent the roller portion from coming into contact with the model material having been cured.

Furthermore, according to yet another embodiment, in the three-dimensional shaping apparatus, the shaping-material ejection device may be adapted to eject the supporting material SA which is to be positioned at a lowermost stage, in an amount increased by an amount corresponding to the amount of offset, at respective positions in an XY plane in the slices successively formed on the shaping plate 40. Thus, since the supporting material SA positioned at the lowermost stage is made to have an increased height, the supporting material SA and the like to be laminated thereon later will be made to have heights increased by the amount of offset, which can prevent the roller portion from coming into contact with the model material having been cured, as described above.

Furthermore, according to yet another embodiment, in the three-dimensional shaping apparatus, the model material MA may be a photo-curing resin, and the curing device 24 may include a light emitting device for emitting light. This enables easily curing the model material with light. It is possible to preferably employ ultraviolet light and the like, as such light.

Furthermore, according to yet another embodiment, in the three-dimensional shaping apparatus, the shaping-material ejection device may be adapted to eject the model material MA and the supporting material SA, such that the materials are spaced apart from each other. This can reliably prevent mixture of the model material and the supporting material at the boundary surface therebetween.

Furthermore, a three-dimensional shaping method according to yet another embodiment is a three-dimensional shaping method for repeatedly performing operations for ejecting, onto a shaping plate 40 for placing a shaped object thereon, a model material MA and a supporting material SA as shaping materials while performing scanning at least in a single direction, and for curing the materials to form slices having a predetermined thickness in a height direction, and further, laminating these slices in the height direction for performing shaping, the model material MA being to form a final shaped object, and the supporting material SA being to support a protruding portion of the model material MA and to be finally removed, and the three-dimensional shaping method may include the steps of: ejecting the model material MA onto the shaping plate 40 with a shaping-material ejection device for ejecting these shaping materials; curing the ejected model material MA with a curing device 24 for curing the shaping materials; ejecting the supporting material SA in an amount larger than an amount of the model material MA, onto the shaping plate 40, with the shaping-material ejection device; curing the other shaping material with the curing device 24; and moving positions of the shaping plate 40 and the head portion 20 with respect to each other in the height direction, after the formation of the slices from the model material MA and the supporting material SA having been cured, and then, repeating the lamination of the slices. Consequently, it is possible to make the time period required for shaping the supporting material shorter than that for the model material, thereby offering the advantage of reduction of the shaping time period by an amount corresponding thereto.

Furthermore, a three-dimensional shaping program according to yet another embodiment is a three-dimensional shaping program for repeatedly performing operations for ejecting, onto a shaping plate 40 for placing a shaped object thereon, a model material MA and a supporting material SA as shaping materials while performing scanning at least in a single direction, and for curing the materials to form slices having a predetermined thickness in a height direction, and further, laminating these slices in the height direction for performing shaping, the model material MA being to form a final shaped object, and the supporting material SA being to support a protruding portion of the model material MA and to be finally removed, and the three-dimensional shaping program may be adapted to cause a computer to realize the functions of: ejecting the model material MA onto the shaping plate 40 with a shaping-material ejection device for ejecting these shaping materials; curing the ejected model material MA with a curing device 24 for curing the shaping materials; ejecting the supporting material SA in an amount larger than the amount of the model material MA, onto the shaping plate 40 with the shaping-material ejection device; curing the other shaping material with the curing device 24; and moving positions of the shaping plate 40 and the head portion 20 with respect to each other in the height direction, after the formation of the slices from the model material MA and the supporting material SA having been cured, and then, repeating the lamination of the slices. Consequently, it is possible to make the time period required for shaping the supporting material shorter than that for the model material, thereby offering the advantage of reduction of the shaping time period by an amount corresponding thereto.

Further, according to yet another embodiment, there is provided a computer-readable recording medium storing the aforementioned program. Examples of the recording medium include: magnetic disks, optical disks, magneto-optical disks, semiconductor memories and other mediums capable of storing programs, such as CD-ROMs, CD-Rs, CD-RWs, flexible disks, magnetic tapes, MOs, DVD-ROMs, DVD-RAMs, DVD-Rs, DVD+Rs, DVD-RWs, DVD+RWs, Blu-rays, HD DVDs (AODs). Further, the programs include those distributed by being stored in the aforementioned recording mediums and also include those distributed through downloading through network lines such as the Internet. Further, recording mediums include apparatuses capable of recording programs, such as general-purpose or dedicated apparatuses which incorporate the aforementioned program in the form of software or firmware, such that it can be executed. Further, respective processes and functions included in the program can be executed by program software capable of being executed by computers. Also, processes in respective portions can be realized by hardware such as predetermined gate arrays (FPGAs, ASICs) or by combinations of program software and partial hardware modules capable of realizing elements in portions of hardware.

### BRIEF DESCRIPTION OF THE DRAWINGS

Fig. 1 is a block diagram illustrating a three-dimensional shaping apparatus in a first embodiment;
Fig. 2 is a block diagram illustrating a three-dimensional shaping apparatus in a modified example;
Fig. 3 is a plan view illustrating a state where a head portion is moved in XY directions;
Fig. 4 is a perspective view illustrating a shaped object formed by shaping a model material and a supporting material;
Fig. 5 is a cross-sectional view of Fig. 4;
Fig. 6 is a perspective view illustrating an external appearance of the head portion;
Fig. 7 is a plan view illustrating a state where the head portion in Fig. 6 is ejecting a shaping material;
Fig. 8 is a perspective view illustrating a state where a roller portion is removing an excess portion of the shaping material;
Fig. 9A is a plan view illustrating an ejection pattern for ejections of a model material and a supporting material with a conventional three-dimensional shaping apparatus, and Fig. 9B is a vertical cross-sectional view illustrating the same;
Fig. 10A is a plan view illustrating an ejection pattern according to a first embodiment, and Fig. 10B is a vertical cross-sectional view illustrating the same;
Fig. 11A is a plan view illustrating an ejection pattern according to a second embodiment, and Fig. 11B is a vertical cross-sectional view illustrating the same;
Fig. 12A is a plan view illustrating an ejection pattern according to a third embodiment, and Fig. 12B is a vertical cross-sectional view illustrating the same;
Fig. 13A is a plan view illustrating an ejection pattern according to a fourth embodiment, and Fig. 13B is a vertical cross-sectional view illustrating the same;
Fig. 14A is a plan view illustrating an ejection pattern according to a fifth embodiment, and Fig. 14B is a vertical cross-sectional view illustrating the same; and
Fig. 15A is a plan view illustrating an ejection pattern according to a sixth embodiment, and Fig. 15B is a vertical cross-sectional view illustrating the same.

### DETAILED DESCRIPTION OF PREFERRED EMBODIMENTS

Hereinafter, embodiments of the present invention will be described, with reference to the drawings. However, the embodiments which will be described below merely illustrate a three-dimensional shaping apparatus and a three-dimensional shaping method for realizing the technical concepts of the present invention, and the three-dimensional shaping apparatus and the three-dimensional shaping method according to the present invention are not intended to be restricted to those which will be described later.

Further, the present specification is not intended to restrict the components defined in the claims to members according to the embodiments. Particularly, the sizes, the materials and the shapes of components described in the embodiments, the placement of them relative to one another, and the like are not intended to restrict the scope of the present invention thereto and are merely illustrated as examples, unless otherwise specified. Further, the sizes of members, the positional relationships thereamong and the like are exaggeratedly illustrated in the drawings, in some cases, for clarification of the description. Further, in the following description, like names and like reference characters are used to denote the same members or members with the same qualities, and detailed descriptions thereof will be properly omitted. Further, the respective components constituting the present invention may be realized, such that a single member constitutes a plurality of components so that the single member can function as the plurality of components, or such that a plurality of members share the functions of a single member.

The three-dimensional shaping apparatus employed in embodiments of the present invention is electrically, magnetically or optically connected to a computer, a printer, an external storage device and other peripheral apparatuses for performing manipulations, control, displaying and other processes, through serial connections or parallel connections using IEEE1394, RS-232x, RS-422, RS-423, RS-485, USBs and the like or through networks using 10BASE-T, 100BASE-TX, 1000BASE-T and the like, thereby enabling communication therebetween. These connections therebetween are not limited to physical connections in a wired manner, but may also be wireless connections and the like using radio waves, infrared rays, optical communications and the like, such as Bluetooth (registered trademark), wireless LAN using IEEE802.1x, and the like. Further, as recording mediums for exchange of data, storage of settings and the like, it is possible to employ memory cards, magnetic disks, optical disks, magnet-optical disks, semiconductor memories and the like. Further, in the present specification, the term "the three-dimensional shaping apparatus" is used not only to mean the main body of the three-dimensional shaping apparatus, but also to mean a three-dimensional shaping system including, in combination therewith, peripheral apparatuses such as a computer, an external storage device.

Further, in the present specification, the three-dimensional shaping apparatus, the three-dimensional shaping method and three-dimensional shaping programs are not intended to be restricted to systems themselves for performing three-dimensional shaping, and apparatuses and methods which are adapted to perform, in a hardware manner, inputting, outputting, displaying, calculations, communications and other processes relating to image formation. Apparatuses and methods adapted to realize such processes in a software manner are also included in the scope of the present invention. For example, it is possible to provide an apparatus and a system enabled to perform image formation and processes relating thereto, by incorporating, into a general-purpose circuit or a computer, software, programs, plug-ins, objects, libraries, applets, compilers, modules, macros capable of operating in certain programs, and such an apparatus and system also correspond to the three-dimensional shaping apparatus, the three-dimensional shaping method, the three-dimensional shaping program and a computer-readable recording medium, according to the present invention. In the present specification, the term "computer" includes workstations, terminals, portable electronic apparatuses, cellular phones using PDC, CDMA, WCDMA, FOMA (registered trademark), GSM and IMT2000 or 4th generation cellular phones, PHSs, PDAs, pagers, smartphones and other electronic devices, as well as general-purpose or dedicated computers. Further, in the present specification, "programs" are not limited to those used solely, and such programs can be used in aspects where they function as portions of certain computer programs, software, services and the like, aspects where they function by being called as required, aspects where they are provided as services in OSs or other environments, aspects where they operate by being resident in environments or aspects where they operate in backgrounds. Also, such programs can be used as other supporting programs.

### (First Embodiment)

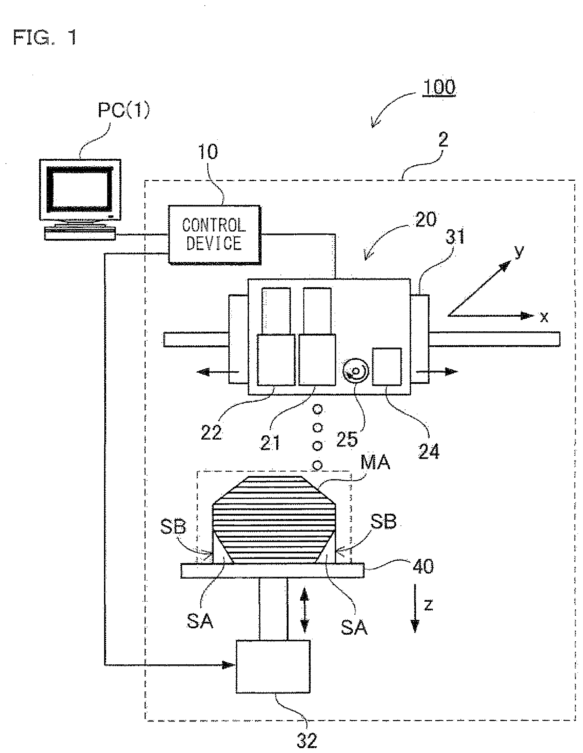

Fig. 1 illustrates a block diagram of a three-dimensional shaping system 100 according to a first embodiment of the present invention. The three-dimensional shaping system 100 is adapted to eject shaping materials in a liquid or fluid state in an ink-jet manner, and then, cure and laminate the materials for fabricating an arbitrary shaped object. As such shaping materials, a model material MA and a supporting material SA are employed, wherein the model material MA is to form a final shaped object, and the supporting material SA is shaped to support at least protruding portions of the model material MA at its lower side in the Z direction and is to be finally removed therefrom.

The three-dimensional shaping system 100 illustrated in Fig. 1 is constituted by a three-dimensional shaping apparatus 2, and a set-data creating apparatus 1 (a computer PC in Fig. 1) which transmits set data to the three-dimensional shaping apparatus 2. The three-dimensional shaping apparatus 2 includes a control device 10, a head portion 20, and a shaping plate 40.

The head portion 20 includes, as shaping-material ejection devices, model-material ejection nozzles 21 for ejecting the model material MA and supporting-material ejection nozzles 22 for ejecting the supporting material SA. The head portion 20 is provided with a roller portion 25 for scraping off excess portions of these ejected shaping materials for smoothing the surfaces of the shaping materials, and further, is provided with a curing device 24 for curing the shaping materials. Further, in order to cause the model-material ejection nozzles 21 and the supporting-material ejection nozzles 22 to eject, in an ink-jet manner, the shaping materials in a liquid or fluid state to proper positions on the shaping plate 40, there are provided an XY direction driving portion 31 and a Z-direction driving portion 32, as a horizontal driving device and a vertical driving device, respectively, wherein the horizontal driving device is for scanning the head portion 20 in horizontal directions, in such a way as to reciprocatingly scan it in an X direction and also to scan it in a Y direction orthogonal to the X direction, while the vertical driving device is for moving the positions of the head portion 20 and the shaping plate 40 with respect to each other in the height direction.

The computer PC functions as the set-data creating apparatus 1. On receiving, from outside, an input of a three-dimensional to-be-shaped object, such as an input of model data designed through a three-dimensional CAD and the like, the set-data creating apparatus 1 converts this CAD data into STL data (Stereo Lithography Data), for example, further creates cross-section data provided by slicing the STL data into a plurality of thin cross-sectional parts, and then transmits the slice data to the three-dimensional shaping apparatus 2 collectively or on a slice-layer by slice-layer basis. At this time, according to a determined attitude, on the shaping plate 40, of the model data designed through the three-dimensional CAD and the like (actually, the STL data resulted from the conversion), regarding portions or spaces in which the model made of the model material at this attitude is required to be supported, the positions at which the supporting material SA should be provided are determined, and based on these data, slice data corresponding to respective layers is created. The control device 10 takes the cross-section data from the computer PC and controls the head portion 20, the XY-direction driving portion 31, and the Z-direction driving portion 32 according to this data. Under the control by the control device 10, the XY-direction driving portion 31 is operated, and also, the model-material ejection nozzles 21 and the supporting-material ejection nozzles 22 in the head portion 20 are caused to eject, as droplets, the model material MA and the supporting material SA as shaping materials, to proper positions on the shaping plate 40, so that a cross-sectional shape is formed based on the cross-section data provided by the computer PC. Further, the model material MA, which is one of the shaping materials ejected on the shaping plate 40, is at least cured, so that the model material MA is changed from the liquid or fluid state to a solid, and thus, is cured. Through such operations, a cross-sectional member corresponding to a single layer, namely a slice, is created.

### (Slice)

Herein, "slice" refers to a unit for laminating layers in the z direction of the shaped object, and the number of slices is equal to the value of the height divided by the thickness of a single laminated layer. Actually, regarding requirements for the determination of the thickness of each slice, a minimum settable thickness is determined, according to the minimum unit amounts of materials which can be ejected from the respective ejection nozzles, variations caused by eccentricity of the roller in the roller portion 25 in the upward and downward directions, and the like. A value determined based on the aforementioned view points is defined as the minimum slice value, and thereafter, a user can finally determine the amount of each slice, in view of the required shaping accuracy and the required shaping speed, for example. That is, if the user selects prioritizing the shaping accuracy, the aforementioned minimum slice value or a value close thereto is determined as the amount of each slice. On the other hand, if the user prioritizes the shaping speed, the amount of each slice can be determined in such a way as to maintain a minimum necessary shaping accuracy. Further, as other methods, it is possible to employ a method which causes the user to sensuously select a ratio between the shaping accuracy and the shaping speed, or a method which causes the user to input a permissible maximum shaping time, thus displays some combinations of shaping times and shaping accuracies as candidates, and further causes the user to select a preferred condition out of these candidates.

Further, shaping actions for one slice data includes a series of steps of ejecting the shaping materials in a liquid or fluid state from the model-material ejection nozzles 21 and the supporting-material ejection nozzles 22 in an ink-jet manner at least in forward paths or rearward paths at least during reciprocating operations of the head portion 20 in the X direction, further causing the roller portion 25 to work for smoothing the surfaces of the uncured shaped object at least in forward paths or rearward paths in a state where the shaped object resulted from the ejection onto the shaping plate 40 has not been cured, and then directing light with a specific wavelength from the curing device 24 to the smoothed surfaces of the shaped object for curing the shaped object, wherein these series of steps are performed at least once, but it goes without saying that the number of times these steps are performed are automatically changed according to the thickness indicated by the slice data and the required shaping accuracy.

On the other hand, the maximum thickness which can be formed on the shaping plate through a single ejection from the model-material ejection nozzles 21 and the support-material ejection nozzles 22 at least in a forward or rearward path is determined by a unit amount of ejection which can maintain the cross-sectional shapes of ejected liquid droplets at substantially-circular shapes, after the liquid droplets have been landed thereon.

### (Shaping Plate 40)

The shaping plate 40 can be raised and lowered by the Z-direction driving portion 32. After a single slice has been formed, the control device 10 controls the Z-direction driving portion 32 in such a way as to lower the shaping plate 40 by a distance corresponding to the thickness of the single slice. Further, operations same as the above are repeatedly performed, so that new slices are laminated on the upper side (the upper surface) of the first single slice. Thus, a plurality of thin slices are successively created and laminated as described above, thereby attaining shaping for a shaped object.

Further, in cases where the shaped object has a protrusion, that is, a so-called overhang shape, the computer PC adds an overhang-supporting-portion shape thereto as required, when the computer PC converts the shaped object into data. Further, the control device 10 performs shaping of an overhang supporting portion SB based on the overhang-supporting-portion shape, at the same time as the shaping of the model material MA which is to form the final shaped object. More specifically, the supporting material SA, which is different from the model material MA, is ejected as droplets from the supporting-material ejection nozzles 22 to form the overhang supporting portion SB. After the shaping, the supporting material SA forming the overhang supporting portion SB is removed, thereby providing a targeted three-dimensional shaped object.

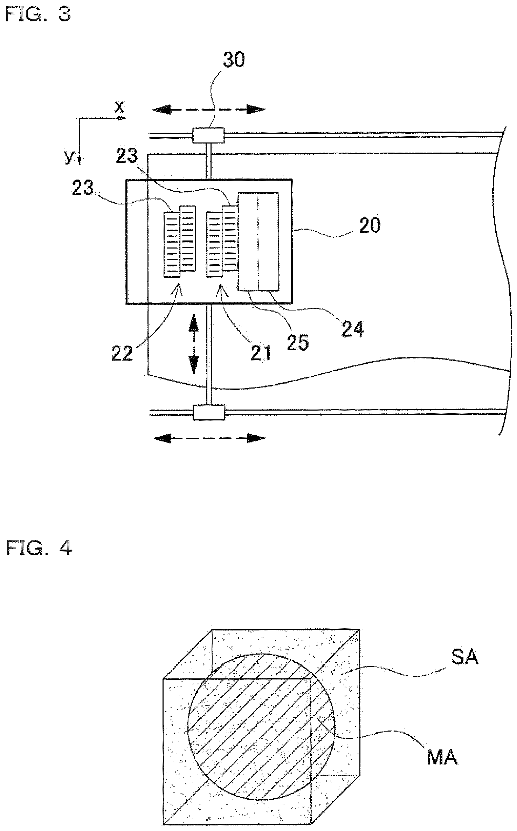

The head portion 20 is moved by a head moving device 30 in horizontal directions, namely in XY directions, as illustrated in a plan view in Fig. 3. Further, the shaping plate 40 is moved in the height direction, namely in the Z direction, by the plate raising/lowering device (the Z-direction driving portion 32), as illustrated in Fig. 1. Accordingly, the heights of the head portion 20 and the shaping plate 40 can be changed with respect to each other, thereby enabling stereoscopic shaping. More specifically, in order to eject, to proper portions, the model material MA and the supporting material SA as shaping materials from the model-material ejection nozzles 21 and the supporting-material ejection nozzles 22, at first, the head portion 20 is reciprocatingly operated in the X direction by the head moving device 30, and then, the model material MA and the supporting material SA are ejected from a plurality of orifices which are provided in the ejection nozzles 21 and 22 and extended in the Y direction. Further, as illustrated in Fig. 3, in cases where the widths of the ejection nozzles 21 and 22 in the Y direction are smaller than the width in the Y direction over which shaping can be performed on the shaping plate 40, and also, the width in the Y direction which is indicated by the shaping model data is larger than the entire length of the orifices extending in the Y direction, the respective ejection nozzles 21 and 22 are reciprocatingly operated in the X direction at predetermined positions, thereafter the respective ejection nozzles 21 and 22 are shifted by a predetermined amount in the Y direction and then are reciprocatingly scanned at these positions, and also, the model material MA and the supporting material SA are ejected to proper portions based on the slice data. These operations are repeated for creating a shaped object corresponding to all the set shaping data.

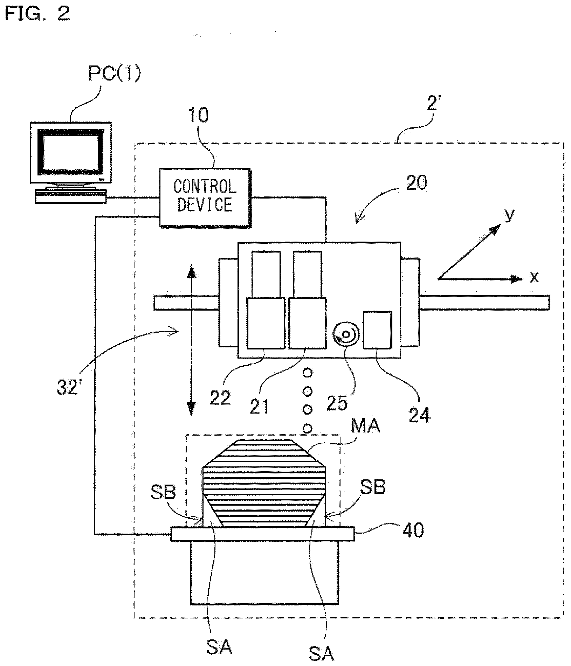

While, in the example of Fig. 1, the plate raising/lowering device for raising and lowering the shaping plate 40 is employed as the Z-direction driving portion 32, the present invention is not limited to this example, and as in a three-dimensional shaping apparatus 2' illustrated in Fig. 2, it is also possible to employ a Z-direction driving portion 32' for moving the head portion in the Z direction, while the plate 40 is fixed in the height direction. Further, movements in the XY directions can be also attained by moving the shaping plate while fixing the head portion. It is possible to eliminate the necessity of shifting of the head portion 20 in the Y direction as described above, by making the widths of the respective nozzles substantially equal to the width in the Y direction over which shaping can be performed on the shaping plate 40. However, even in such cases, in order to increase the resolution in the Y direction for the shaped object, which is determined by the intervals between the orifices provided in the nozzles, for example, it is possible to shift the head portion 20 in the Y direction, such that each orifice is positioned between the positions of orifices during the previous shaping.

### (Control Device 10)

The control device 10 controls the pattern of ejections of the shaping materials. That is, the control device 10 causes the shaping-material ejection device to eject the model material MA and the supporting material SA onto the shaping plate 40 at least in one of forward and rearward paths, during reciprocating scanning in the X direction, while reciprocatingly scanning the head portion 20 in a single direction, and further, causing the curing device 24 to cure the model material MA and the supporting material SA at least in one of the forward and rearward paths after the shaping-material ejecting device has ejected the shaping materials onto the shaping plate, thereby creating slices. Further, the control device 10 moves the positions of the shaping plate 40 and the head portion 20 with respect to each other in the height direction, and further, repeats laminating of slices to attain shaping. Further, as will be described later in detail, the smoothing of the surfaces of the shaping materials by the roller portion 25 is performed at least in one of forward and rearward paths, after the shaping-material ejection device has ejected the shaping materials onto the shaping plate, but before the curing device 24 cures the surfaces of the shaping materials.

Through a single reciprocating scanning, the control device 10 ejects any one shaping material out of the model material MA and the supporting material SA, smoothens the surface of the shaping material with the roller portion 25, and further cures it with the curing device 24. Through the next and subsequent reciprocating scannings, the control device 10 ejects the other shaping material which has not been ejected, smoothens the surface of the shaping material, and cures it. These series of processes are performed at least once for forming a single slice. As a matter of course, the present invention includes repeating, a plurality of times, the aforementioned series of processes corresponding to slice data for a single layer, according to the shaping time period and the final model surface accuracy required by the user, for example. Accordingly, the surface of any one of the model material MA and the supporting material SA can be smoothed in an uncured state, then cured, and thereafter, the other of the model material MA and the supporting material SA is ejected. This enables the model material MA and the supporting material SA to be individually cured, thereby offering the advantage of effective prevention of mixture of the model material MA and the supporting material SA at the boundary therebetween.

### (Shaping Material)

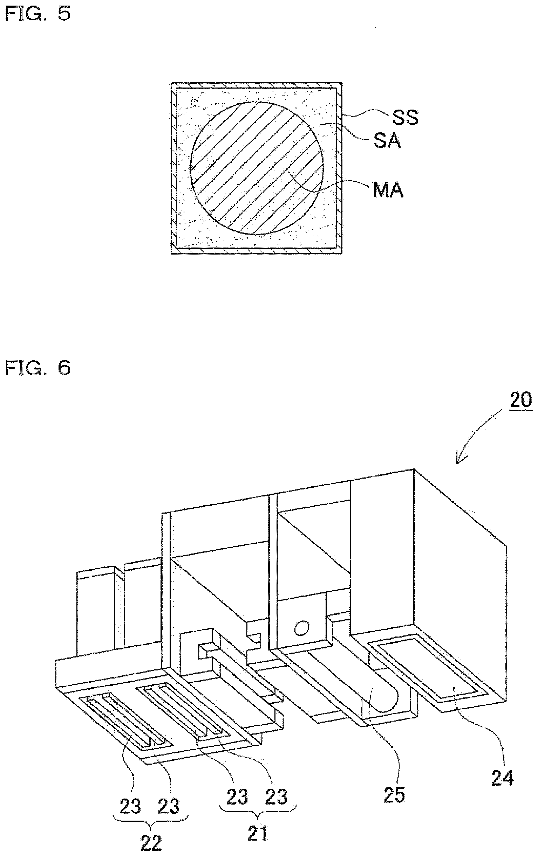

As described above, as shaping materials, a model material MA and a supporting material SA are employed, wherein the model material MA is to form a final shaped object, and the supporting material SA is to support protruding portions of the model material MA and to be removed finally. Fig. 4 illustrates a perspective view of a shaped object formed by shaping a spherical-shaped model material MA in such a way as to cover its periphery with a rectangular-parallelepiped supporting material SA. Fig. 5 illustrates a cross-sectional view of the same.

### (Curing Device 24)

As the model material MA, it is possible to employ a photo-curing resin, such as an UV curing resin. In this case, the curing device 24 is a light emitting device capable of emitting light containing at least a specific wavelength which causes the material of the model material MA to be cured in reaction thereto and, for example, the curing device 24 is an ultraviolet-ray emitting device such as an UV lamp. As such an UV light lamp, it is possible to employ a halogen lamp, a mercury lamp, an LED and the like. Further, in this example, the supporting material is also formed from an UV curing resin. In cases of employing an UV curing resin which can be cured by UV rays having the same wavelength, it is possible to employ the same ultraviolet-ray emitting device, thereby offering the advantage of utilization of a common light source.

### (Model Material MA)

Further, as the model material MA, it is possible to employ a thermoplastic resin. In this case, a cooling device is employed as the curing device 24. Further, in cases of employing thermoplastic resins as both the model material and the supporting material, by employing, as the model material, one having a melting point higher than the melting point of the supporting material, it is possible to remove the supporting material through melting, by heating the shaped object after the completion of layer laminations to a temperature higher than the melting point of the supporting material and lower than the melting point of the model material, and then maintaining the temperature thereof. Also, it is possible to employ a photo-curing resin as one of the model material and the supporting material, while employing a thermoplastic resin as the other of the model material and the supporting material.

Alternatively, it is possible to employ, as the model material, a material which can be cured by chemically reacting with a curing material. Further, it is also possible to mix a liquid modifier agent into the model material as required, in order to adjust its injection characteristics, such as its viscosity and surface tension. Further, its injection characteristics can be changed, through temperature adjustments. Other exemplary model materials include UV photopolymers, epoxy resins, acrylic resins and urethanes.

### (Supporting Material SA)

As the supporting material SA, it is possible to employ a water-swellable gel, wax, a thermoplastic resin, a water-soluble material, a meltable material and the like, as a removable material. For removing the supporting material SA, it is possible to employ appropriate methods, for example, dynamic cleanings such as solution with water, heating, chemical reactions and hydraulic cleaning, separations utilizing thermal expansion differences through melting by irradiation of electromagnetic waves, according to properties of the supporting material.

Since the supporting material is finally removed, it is required to exhibit a property of being easily removed. For example, after the completion of the shaping for the shaped object, the water-soluble supporting material can be put into a water bath to be dissolved and removed. On the other hand, when the supporting material has higher solubility, the supporting material has a lower strength, and thus, when humidity is high, the supporting material is prone to deliquesce to lose its shape, drop and the like. If the supporting material has insufficient rigidity, its ability to support the model material is degraded, which may make it hard to shape the model material on the upper surface of the supporting material, thereby degrading the accuracy of the model material. On the other hand, if the supporting material has increased rigidity, this increases the difficulty of dissolving the supporting material into water, thereby necessitating a longer time for removing it, when the supporting material is removed from the final shaped object. Since the supporting material is required to exhibit inconsistent properties as described above, it has been conventionally difficult to provide a supporting material capable of exhibiting optimum properties.

To cope therewith, in cases of employing a water-soluble material as the supporting material, as in the present embodiment, it is possible to form a supporting shell SS as an outer shell of the supporting material SA, which can inhibit the supporting material from directly contacting with air as much as possible during shaping of the model with the shaping apparatus, thereby inhibiting the supporting material from absorbing moisture in air. This prevents deformations of the supporting material, and also, prevents deformations of the model material due to deformations of the supporting material, during shaping. Further, by forming the supporting shell SS, it is possible to inhibit the supporting material inside thereof from absorbing the moisture in the air, which can improve the water-solubility performance of the supporting material. As a result, it is possible to increase the speed of dissolution of the supporting material, when the supporting material is immersed into a solution such as water for removal thereof. With this structure, it is possible to enable the supporting material to have sufficient rigidity, while increasing the speed of dissolution thereof since the supporting shell SS as the outermost shell is broken during removal thereof, thereby offering the advantage of reduction of the time period required for removal of the supporting material. In the examples of Figs. 4 and 5, the supporting shell SS formed on the surfaces of the rectangular parallelepiped shape is broken, in order to remove the supporting material SA inside thereof.

### (Details of Supporting Material SA)

The supporting material SA contains a non-curable ingredient. Particularly, by enhancing the solubility thereof, it is possible to dissolve and remove the supporting material within a shorter time, by introducing it in a water bath. The solubility of the supporting material is not limited to water solubility and can also be solubility to a certain solvent. On the other hand, such a supporting material is in a liquid state or a gel state, and thus, becomes sticky or slimy when being touched by hands. Therefore, such a supporting material tends to be contaminated. To cope therewith, the supporting shell SS is provided on the surface of the supporting material as described above, in order to protect it.

### (Supporting Shell SS)

The supporting shell SS provided on the outer surface of the supporting material SA is formed from the model material MA having higher rigidity than that of the supporting material SA. This can cause the supporting material SA to have higher rigidity at its surface, which prevents outflows of the supporting material SA. In the present embodiment, since the supporting shell SS is formed from the model material MA ejected from the model-material ejection nozzles 21, the model-material ejection nozzles 21 in the head portion 20 can be commonly utilized as ejection nozzles for the supporting shell SS, and also, shaping of the supporting shell SS on the supporting material SA can be performed concurrently with the shaping of the model material MA. This offers advantages in terms of the cost and the speed. More specifically, at the time of creating three-dimensional shaping data for at least the model material MA and the supporting material SA, this shaping data is created, regarding the positions at which the outer surface is to be formed from the supporting material in the shaping data, in such a way as to automatically change the supporting material positioned at the outer surface to the model material or in such a way as to form a thin-film layer made of the model material to cover the outer surface of the supporting material. Further, the control device 10 controls the shaping-material ejection device, such that the model material MA is ejected and cured at the positions at which the supporting shell SS is to be formed on the outer surface of the supporting material SA, and the outer surface of the supporting material SA is covered with the model material MA having a small thickness, during formation of the respective slices corresponding to the created data. Thus, the model material MA with such a small thickness is formed on the surface of the supporting material SA, which offers the advantage of ease of formation of the supporting shell SS.

Further, regarding the thickness of the thin film made of this model material, it is considered that the thickness thereof is preferably about 0.1 mm to 5 mm, in view of the balance between the ease of removal and the securement of the strength. Further, while, in the present embodiment, the supporting shell SS is made of the model material MA ejected from the model-material ejection nozzles 21, it is also possible to form a supporting shell using additionally-provided nozzles for ejecting a material different from the model material MA, provided that this material exhibits appropriate characteristics as the supporting shell.

In this case, regarding the characteristics of the material of the supporting shell, the material of the supporting shell is preferably a material having higher hardness than that of the model material MA and also having lower tenacity than that of the model material MA, in view of striking a higher-degree balance between the ease of removal and the securement of the strength.

### (Structure for Separating Supporting Shell SS)

On the other hand, with the structure which provides the supporting shell SS on the supporting material SA, the higher the rigidity of the supporting shell SS, the higher the difficulty of stripping off the supporting shell SS from the shaping material. Therefore, it is preferable to additionally provide a structure for facilitating the stripping off of the supporting shell SS therefrom. More specifically, the surface of the supporting material SA is not entirely covered with the supporting shell SS, and an exposed portion which partially exposes the supporting material SA is provided.

This makes it easier to break the supporting shell SS at the exposed portion after shaping of the shaped object. Further, when the supporting material SA has solubility, it is possible to dissolve the supporting material SA through the exposed portion, by immersing it in a liquid, after shaping of the shaped object. This enables stripping off the supporting shell SS from the shaped object without breaking it, thereby offering the advantage of labor saving in operations for removing the supporting material SA. Also, it is possible to shape the continuous outer surface on which the supporting shell SS should be formed, such that only the outer peripheral portions of this continuous outer shape have a larger thickness than those of the other portions of the outer surface on which the supporting shell SS should be formed, in order to make it easier to integrally strip off the continuous outer surface on which the supporting shell SS is formed.

### (Head Portion 20)

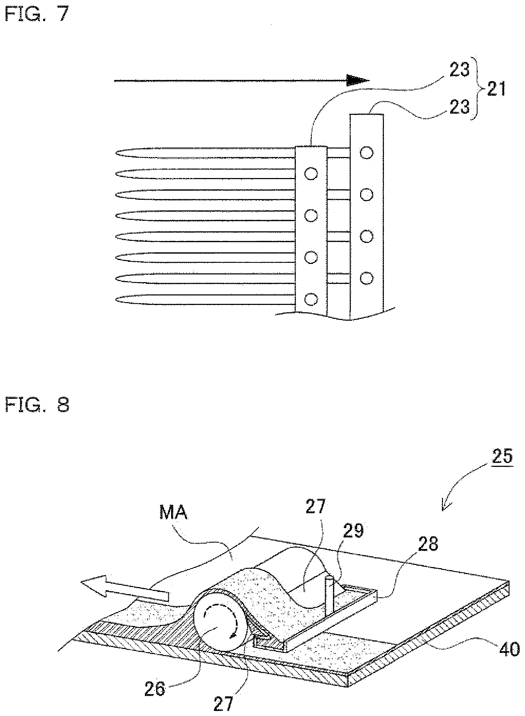

Fig. 6 illustrates an example of the head portion 20 in the ink-jet type three-dimensional shaping apparatus. The head portion 20 illustrated in the figure is provided with dedicated ejection nozzles for individually ejecting a model material MA and a supporting material SA, as shaping-material ejection devices. More specifically, the head portion 20 includes model-material ejection nozzles 21 for ejecting the model material MA and supporting-material ejection nozzles 22 for ejecting the supporting material SA, such that the materials are spaced apart from each other in parallel with each other. The ejection nozzles are both provided with two nozzle rows 23, and these nozzle rows 23 are placed so as to be deviated from each other by an amount corresponding to half a nozzle as illustrated in a plan view in Fig. 7, in order to increase the resolution. Further, in the model-material ejection nozzles 21 and in the supporting-material ejection nozzles 22, the respective nozzle rows 23 placed in the offset state are placed so as to be coincident with the same lines, so that the resolutions for the model material and the supporting material are made coincident with each other.

In the head portion 20, there are integrally provided the supporting-material ejection nozzles 22, the model-material ejection nozzles 21, the roller portion 25 and the curing device 24 in this order from the left side. Each of the ejection nozzles is adapted to eject an ink-type shaping material, in the way of a piezoelectric-device type ink-jet printing head. Further, the shaping material is adjusted to have such a viscosity that it can be ejected from the ejection nozzles.

In the example of Fig. 6, the head portion 20 is adapted to eject the model material MA at first, and thereafter, eject the supporting material SA. Further, the head portion 20 is adapted to eject the shaping materials in forward paths (in the left-to-right direction in the figure) and is adapted to cure the shaping materials with the curing device 24 in rearward paths (in the right-to-left direction in the figure).

### (Roller Portion 25)

The head portion 20 is further provided with the roller portion 25 for smoothing the surfaces of the shaping materials by pressing the surfaces of the ejected model material MA and the ejected supporting material SA in uncured states and by removing excess portions of the shaping materials. The states of operations of this roller portion 25 will be described, with reference to a schematic view of Fig. 8. In this example, there is illustrated a state where a roller main body 26 is smoothing the surface of an ejected model material MA in an uncured state. The roller portion 25 includes the roller main body 26 as a rotational member, a blade 27 placed to protrude toward the surface of the roller main body 26, a bath 28 for storing the shaping material scraped off by the blade 27, and a suction pipe 29 for discharging the shaping material stored in the bath 28. The roller main body 26 is rotated in the direction opposite from the direction of traveling of the head portion 20 (in the clockwise direction in Fig. 8), thereby scraping away the uncured shaping material. The shaping material having been scraped away adheres to the roller main body 26 and is transferred to the blade 27, and thereafter, is scraped off by the blade 27 and guided into the bath 28. Therefore, the blade 27 is fixed at an attitude inclined downwardly toward the bath 28. Further, the suction pipe 29 is connected to a pump and is adapted to suction the shaping material stored in the bath 28 and then discharge it. In this example, the roller main body 26 is made to have an outer shape with a diameter φ of about 20 mm and is adapted to have a rotational speed of about 10 rps.

The roller portion 25 is adapted to perform scraping when the head portion 20 travels in the right-to-left direction in the figure. In other words, when the model-material ejection nozzles 21 and the supporting-material ejection nozzles 22 are caused to eject the model material MA and the supporting material SA, respectively, to proper positions, based on slice data, while the head portion 20 travels in the left-to-right direction, the roller portion 25 does not come into contact with the shaping materials, and similarly, the curing device 24 does not perform irradiation from the light source. After at least the respective nozzles 21 and 22 are caused to eject the shaping materials, for example, in a forward path in the direction of left-to-right main scanning of the head portion 20 in the figure, the roller portion 25 performs the aforementioned scraping operation, and also, the curing device 24 operates as a light source which emits light for curing at least the model material MA in a rearward path in the direction of right-to-left main scanning.

As illustrated in Figs. 1 and 6, the roller portion 25 is placed in front of the curing device 24 in the direction of traveling of the head portion 20, namely, to the left thereof in the figure. As a result, the uncured shaping materials are scraped off by the roller portion 25, and thereafter, the shaping materials are cured by the curing device 24. Due to this placement, the scraping and curing of the shaping materials can be performed along the same path, thereby offering the advantage of high efficiency of the processes.

### (Individual Curing at Boundary Surface)

This three-dimensional shaping apparatus is adapted to cure the model material MA and the supporting material SA individually, in order to prevent mixture of both the materials at the boundary portion between the model material MA and the supporting material SA. To attain this, the control device 10 sets the pattern of ejections of the model material MA and the supporting material SA. Hereinafter, the procedure thereof will be described, with reference to plan views and vertical cross-sectional views illustrating the ejection patterns in Figs. 9 to 15. In these figures, for convenience of description, there are illustrated examples where the model material MA or the supporting material SA is ejected to form a single line through a single reciprocating scanning. Further, the model material MA is designated by diagonal lines, while the supporting material SA is designated by a solid color. Further, the sequence of reciprocating scannings is designated by numbers.

Conventionally, as illustrated in Fig. 9A, the model material MA and the supporting material SA have been ejected during the same reciprocating scannings. Therefore, two lines can be formed through two reciprocating scannings. On the other hand, as illustrated in Fig. 9B, the model material MA and the supporting material SA come into contact with each other at the boundary portion therebetween in a state where the materials have not been cured, which causes mixture of the materials at the boundary surface, thereby inducing the problem of degradation of the quality at the boundary surface.

On the contrary, as illustrated in Fig. 10, the three-dimensional shaping apparatus according to the first embodiment is adapted to eject and cure only one of the shaping materials, that is, only the model material MA in an example illustrated in Fig. 10A, while not ejecting the supporting material SA. Further, the three-dimensional shaping apparatus is adapted to eject and cure only the supporting material SA, during another reciprocating scanning. As described above, both the model material MA and the supporting material SA are not ejected and cured during the same reciprocating scannings, and the model material MA and the supporting material SA are ejected and cured during respective different scannings, which can prevent contact between the model material MA and the supporting material SA which have not been cured. More specifically, in this embodiment, at first, the model material MA is ejected to have a predetermined first thickness, and thereafter, in a state where the model material MA has not been cured, the roller portion 25 provided in the head portion 20 is caused to scrape off excess portions of the material for smoothing the model material MA in at least one forward or rearward path which is different from at least one forward or rearward path in which the model material MA has been ejected, thereby ensuring that the model material MA has a second thickness smaller than the first thickness described above. Further, the curing device 24 is caused to cure the model material MA having been ejected onto the shaping plate 40, in at least one forward or rearward path which is the same path as that for the smoothing operation of the roller portion 25 or in at least one forward or rearward path after that for the smoothing operation of the roller portion 25. Further, after the processing for curing the model material MA having been ejected previously, next, the supporting material SA is ejected to have a predetermined third thickness larger than the predetermined second thickness of the model material, and thereafter, in a state where the supporting material SA has not been cured, the roller portion 25 provided in the head portion 20 is caused to scrape off excess portions of the material for smoothing the supporting material SA in at least one forward or rearward path which is different from at least one forward or rearward path in which the supporting material SA has been ejected, thereby ensuring that the supporting material SA has a fourth thickness which is substantially equal to or larger than the second thickness of the model material but smaller than the third thickness of the supporting material SA. Further, the curing device 24 is caused to cure the supporting material SA having been ejected onto the shaping plate 40, in at least one forward or rearward path which is the same path as that for the smoothing operation of the roller portion 25 or in at least one forward or rearward path after that for the smoothing operation of the roller portion 25.

That is, a first material is ejected at first, and further, is shaped by the roller portion 25 and is cured to have a second thickness. Further, a second material is ejected later to be applied to have a third thickness larger than the second thickness. Further, the second material is shaped by the roller portion 25 and is cured to have a fourth thickness which is substantially equal to or larger than the second thickness but smaller than the third thickness. This can prevent mixture of the first and second materials, namely, the model material MA and the supporting material SA, at the boundary surface at which they contact with each other, and also, can smooth the surfaces of both the materials.

Also, the model material MA and the supporting material SA, which are not ejected during the same scannings, can be alternately ejected through respective reciprocating scannings, or one of the shaping materials can be continuously ejected. In this case, a minimum necessary rule is that, the first-ejected material is smoothed by the roller portion 25 and cured by the curing device, and thereafter, the later-elected material should be applied. In the examples of Fig. 10A and 10B, the model material MA is ejected and cured through a first reciprocating scanning, and thereafter, the model material MA is further ejected and cured through a subsequent second reciprocating scanning. Further, through a third reciprocating scanning, subsequently to the line of the model material MA formed through the first reciprocating scanning, the supporting material SA is ejected and cured.

Further, through a fourth reciprocating scanning, continuously, the supporting material SA is further ejected and shaped, subsequently to the line of the model material MA formed through the second reciprocating scanning. As described above, one of the shaping materials is continuously ejected, which can provide a vacant time period before the ejection of the other shaping material. This enables sufficiently curing the shaping material during this time period, thereby reliably preventing mixture of these shaping materials at the boundary surface where they come into contact with each other. This is particularly effective in cases of employing resins and the like which are cured slowly, as the model material MA and the supporting material SA. Further, as a matter of course, the aforementioned series of processes for shaping the model material MA and the supporting material SA can either be overall processes based on single slice data or processes constituting a portion thereof. In the latter case where the series of shaping processes are a portion thereof, the aforementioned series of shaping processes should be repeated as required.

### (Second Embodiment)

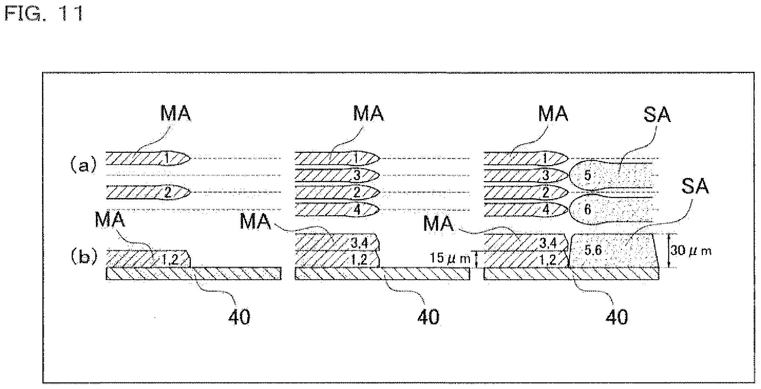

With the aforementioned method in Fig. 10, it is possible to cure one of the shaping materials for reliably preventing mixture thereof with the other shaping material, but, on the other hand, the method has the drawback of necessitating two reciprocating scannings for shaping a single line, thereby doubling the cycle time in comparison with the method of Fig. 9. To cope therewith, there will be described an example where this problem is overcome, as a second embodiment, with reference to Fig. 11. In this example, two lines of the model material MA are formed through first and second reciprocating scannings, which is the same as the example of Fig. 10. Next, through a third reciprocating scanning, the model material MA is ejected and cured between the first-formed line of the model material MA and the second-formed line of the model material MA. Further, through a fourth reciprocating scanning, a line of the model material MA is formed under the second-formed line of the model material MA. After the four lines of the model material MA have been formed as described above, the supporting material SA is successively ejected and cured through fifth and sixth reciprocating scannings. In this case, the amount of the supporting material SA which is ejected and cured through each reciprocating scanning is twice that in Fig. 10. For example, assuming that, in the example of Fig. 10, the model material MA is ejected and cured to have a height of 15 µm, the supporting material SA is ejected and cured, in Fig. 11, to have a height of 30 µm, which is twice that in Fig. 10. Accordingly, even though the supporting material SA is applied through only two reciprocating scannings, it is possible to apply an amount of the supporting material SA corresponding to the amount of the model material applied through four reciprocating scannings. As a result thereof, through the four reciprocating scannings for the model material and the two reciprocating scannings for the supporting material, namely, a total of six reciprocating scannings, it is possible to attain shaping equivalent to four lines in Fig. 9, that is, four reciprocating scannings, thereby necessitating a 1.5-times cycle time in comparison with the example of Fig. 9 in terms of the speed. Thus, while, in Fig. 10, there is a need for a cycle time which is twice that of Fig. 9, it is possible to reduce the cycle time to 1.5 times that of Fig. 9, thereby offering the advantage of reduction of the processing time. On the other hand, the resolution for the supporting material SA is reduced to 1/2 that of Fig. 10. This, however, will not degrade the resultant shaped object in quality, since the supporting material SA is to be removed finally.

More specifically, in this embodiment, at first, the model material MA is ejected to have a predetermined first thickness, and thereafter, in a state where the model material MA has not been cured, the roller portion 25 provided in the head portion 20 is caused to scrape off excess portions of the material for smoothing it in at least one forward or rearward path which is different from at least one forward or rearward path in which the model material MA has been ejected, thereby ensuring that the model material MA has a second thickness smaller than the first thickness. Further, the curing device 24 is caused to cure the model material MA having been ejected onto the shaping plate 40, in at least one forward or rearward path which is the same path as that for the smoothing operation of the roller portion 25 or in at least one forward or rearward path after that for the smoothing operation of the roller portion 25. Next, on at least a portion of the surface of the model material MA formed to have the second thickness, actually at proper positions based on slice data, the model material MA is ejected to have a predetermined third thickness, and thereafter, in a state where the model material MA has not been cured, the roller portion 25 provided in the head portion 20 is caused to scrape off excess portions of the material for smoothing it in at least one forward or rearward path which is different from at least one forward or rearward path in which the model material MA has been ejected, thereby ensuring that the model material MA has a fourth thickness smaller than the third thickness. Further, the curing device 24 is caused to cure the model material MA having been ejected onto the shaping plate 40, in at least one forward or rearward path which is the same path as that for the smoothing operation of the roller portion 25 or in at least one forward or rearward path after that for the smoothing operation of the roller portion 25. Thus, at this time point, the model material has, in total, a fifth thickness equal to the sum of the second thickness and the fourth thickness, as a result of the two shapings.

Further, after the processing for curing the model material MA having been ejected previously, the supporting material SA is next ejected to have a predetermined sixth thickness larger than the predetermined fifth thickness of the model material, and thereafter, in a state where the supporting material SA has not been cured, the roller portion 25 provided in the head portion 20 is caused to scrape off excess portions of the material for smoothing it in at least one forward or rearward path which is different from at least one forward or rearward path in which the supporting material SA has been ejected, thereby ensuring that the supporting material SA has a seventh thickness which is substantially equal to or larger than the fifth thickness of the model material but is smaller than the sixth thickness of the supporting material SA. Further, the curing device 24 is caused to cure the supporting material SA having been ejected onto the shaping plate 40, in at least one forward or rearward path which is the same path as that for the smoothing operation of the roller portion 25 or in at least one forward or rearward path after that for the smoothing operation of the roller portion 25.

That is, a first material is ejected, and then, is shaped by the roller portion 25 and is cured to have a fifth thickness, through two shapings repeated previously. Thereafter, a second material is ejected and applied to have a sixth thickness larger than the fifth thickness. Further, the second material is shaped by the roller portion 25 and is cured to have a seventh thickness which is substantially equal to or larger than the fifth thickness but smaller than the sixth thickness. This can prevent mixture of the first and second materials, namely the model material MA and the supporting material SA, at the boundary surface at which they come into contact with each other, and also, can smooth the surfaces of both the materials.

Further, in the examples of Fig. 11, the third-formed line and the fourth-formed line of the model material MA are between the first-formed line and the second-formed line in the example of Fig. 11A, although they are on the first-formed line and the second-formed line in the example of Fig. 11B. This is because, in actual, the shaping materials are ejected as larger droplets, and consequently, are laminated to have a larger height as in Fig. 11B, although the intervals between the lines in a plane are exaggeratedly illustrated in Fig. 11A.

### (Third Embodiment)

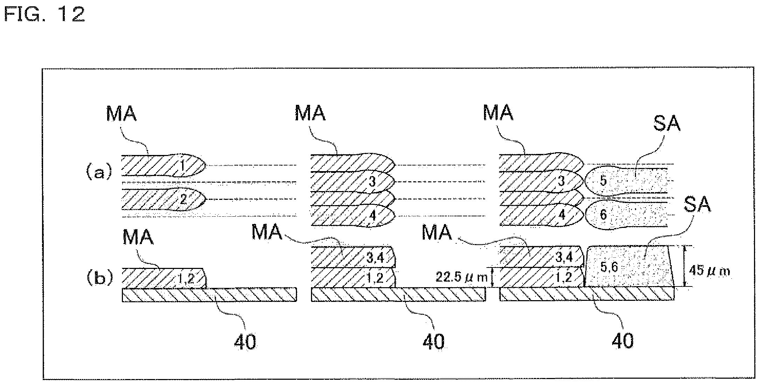

Fig. 12 illustrates, as a third embodiment, an example which provides an improvement over the second embodiment, in terms of the cycle time. In this example, the procedure of reciprocating scannings is the same as that of Fig. 11, but the amounts of ejections of shaping materials are changed therefrom. More specifically, the amount of each ejection of the model material MA is 1.5 times that of Fig. 11 (Fig. 10). For example, assuming that, in Fig. 11B, the model material MA is formed to have a height of 15 µm, the model material MA is formed, in Fig. 12, to have a height of 22.5 µm, which is 1.5 times that of Fig. 11B. Further, the amount of ejections of the supporting material SA is 1.5 times that of Fig. 11 (3 times that of Fig. 10). As a result thereof, the shaping materials can be laminated to have a height of 45 µm, in total, through six reciprocating scannings. In comparison with Fig. 9, since the shaping materials are shaped to have a height of 15 µm through two reciprocating scannings in Fig. 9, the shaping materials are shaped, in this example, to have a height which is 3 times that of Fig. 9 within a time period which is three times that of Fig. 9, which means the same cycle time thereas. On the other hand, the resolution for the supporting material SA is reduced to 1/3, but this will induce no problem in terms of the quality, since the supporting material SA is to be removed finally as described above. Further, the resolution for the model material MA is also reduced to 2/3. However, this reduction of the resolution occurs on the order of several tens of micrometers, and therefore, is considered to induce substantially no problem, practically. Details of the present embodiment are the same as those described in the third embodiment and are not described herein.

### (Fourth Embodiment)

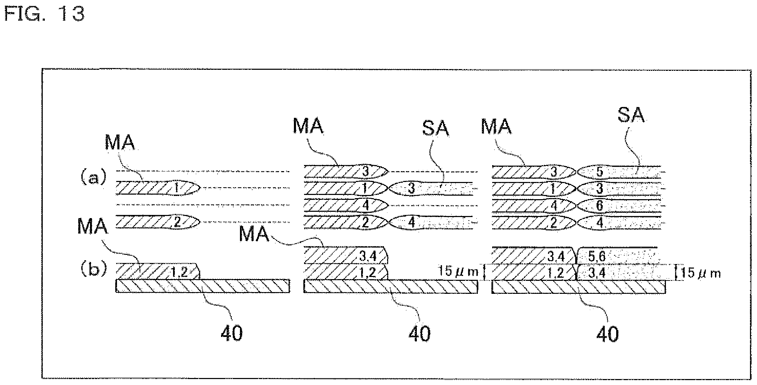

On the other hand, instead of not ejecting and curing the model material MA and the supporting material SA at the same time in the same line, it is also possible to eject the model material and the supporting material in different lines during the same reciprocating scannings. That is, by ejecting the model material and the supporting material in different lines, the model material and the supporting material can be spaced apart from each other obliquely in a horizontal plane. This example will be described, as a fourth embodiment, with reference to Fig. 13. In this example, the model material MA is ejected and cured through first to fourth reciprocating scannings, which is the same as the example of Fig. 11. On the other hand, the supporting material SA is ejected and cured as follows. During the third reciprocating scanning, in the forward path, after the ejection of the model material MA, the supporting material SA is subsequently ejected in an offset line which is displaced from the same line as the line of the model material MA, i.e., in the example of Fig. 13A, in the same line as the first-formed line of the model material MA, and further, the supporting material SA is cured in the rearward path. Similarly, during the fourth reciprocating scanning, after the ejection of the model material MA, the supporting material SA is subsequently ejected to offset positions, i.e., in the example of Fig. 13A, in the same line as the second-formed line of model material MA, and further, the supporting material SA is cured in the rearward path. Further, during subsequent fifth and sixth reciprocating scannings, similarly, the supporting material SA is ejected and cured in the same lines as the third-formed line and the fourth-formed line of the model material MA. With this method, although, in the rearward paths during the third and fourth reciprocating scannings, the uncured model material MA and the uncured supporting material SA are cured concurrently, that is, the materials may be mixed with each other since both of the materials are uncured in this stage, since the model material MA and the supporting material SA are placed in an offset state in a horizontal plane, and thus, are spaced apart from each other obliquely as illustrated in Fig. 13A, and further, the model material MA and the supporting material SA are at different heights in the vertical direction, and thus, are obliquely spaced apart from each other in the height direction as illustrated in Fig. 13B, as a result, the model material MA and the supporting material SA are spaced apart from each other both in a horizontal plane and in a vertical plane, which can prevent mixture of them at the boundary surface where they are close to each other. This method does not degrade the resolutions for the model material MA and the supporting material SA. On the other hand, in comparison with Fig. 9 in terms of the speed, assuming that the amounts of the used shaping materials are such that these shaping materials are ejected to have a thickness of 15 µm in both Fig. 9 and Fig. 13, the shaping materials can be shaped to have a height of 15 µm through two reciprocating scannings in Fig. 9, while, in Fig. 13, they can be shaped to have a height of 30 µm through six reciprocating scannings, thereby involving 1.5-times cycle time.

More specifically, in this embodiment, at first, the model material MA is ejected to have a predetermined first thickness, and thereafter, in a state where the model material MA has not been cured, the roller portion 25 provided in the head portion 20 is caused to scrape off excess portions of the material for smoothing it in at least one forward or rearward path which is different from at least one forward or rearward path in which the model material MA has been ejected, thereby ensuring that the model material MA has a second thickness smaller than the first thickness. Further, the curing device 24 is caused to cure the model material MA having been ejected onto the shaping plate 40, in at least one forward or rearward path which is the same path as that for the smoothing operation of the roller portion 25 or in at least one forward or rearward path after that for the smoothing operation of the roller portion 25. Next, on at least a portion of the surface of the model material MA formed to have the second thickness, actually at proper positions based on slice data, the model material MA is ejected to have a predetermined third thickness, and thereafter, in a state where the model material MA has not been cured, the roller portion 25 provided in the head portion 20 is caused to scrape off excess portions of the material for smoothing it in at least one forward or rearward path which is different from at least one forward or rearward path in which the model material MA has been ejected, thereby ensuring that the model material MA has a fourth thickness smaller than the third thickness. Further, the curing device 24 is caused to cure the model material MA having been ejected onto the shaping plate 40, in at least one forward or rearward path which is the same path as that for the smoothing operation of the roller portion 25 or in at least one forward or rearward path after that for the smoothing operation of the roller portion 25. Thus, at this time point, the model material has, in total, a fifth thickness equal to the sum of the second thickness and the fourth thickness, as a result of the two shapings.

On the other hand, the supporting material SA is ejected to appropriate positions to have a sixth thickness smaller than the fifth thickness of the model material, in at least one forward or rearward path which is the same processing as the aforementioned processing for applying the model material MA to have the third thickness. However, in this stage, as described above, the supporting material has the sixth thickness smaller than the fifth thickness of the model material MA, which makes it hard to smooth the surface of the supporting material with the roller portion 25. Therefore, the roller portion 25 is caused to smooth only the surface of the model material MA formed to have the third thickness, and thereafter, the curing device 24 is caused to cure the surfaces of the model material MA and the supporting material SA. Further, thereafter, on the surface of the supporting material SA having the sixth thickness, the supporting material SA is ejected to have a seventh thickness, and thereafter, in a state where the supporting material SA has not been cured, the roller portion 25 provided in the head portion 20 is caused to scrape off excess portions of the material for smoothing it in at least one forward or rearward path which is different from at least one forward or rearward path in which the supporting material SA has been ejected, thereby ensuring that the supporting material SA has an eighth thickness which is substantially equal to or larger than the fifth thickness of the model material but smaller than the seventh thickness of the supporting material SA. Further, the curing device 24 is caused to cure the supporting material SA having been ejected onto the shaping plate 40, in at least one forward or rearward path which is the same path as that for the smoothing operation of the roller portion 25 or in at least one forward or rearward path after that for the smoothing operation of the roller portion 25.

### (Fifth Embodiment)

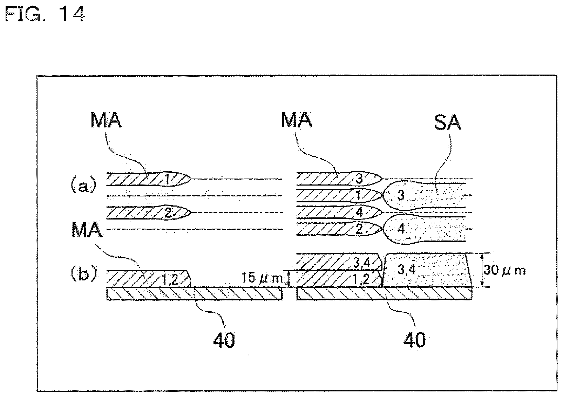

Further, with reference to Fig. 14, there will be described, as a fifth embodiment, an example which provides an improvement over the fourth embodiment, in terms of the cycle time. In this example, the model material MA is ejected and cured through first to fourth reciprocating scannings. Further, during the third reciprocating scanning, in the forward path, after the ejection of the model material MA, the supporting material SA is subsequently ejected in an offset line, i.e., in the example of Fig. 14A, in the same line as the first-formed line of the model material MA. Further, during the fourth reciprocating scanning, in the forward path, after the ejection of the model material MA, the supporting material SA is ejected in the same line as the second-formed line of the model material MA. Further, the supporting material SA is cured in the rearward paths. These points are the same as those in the fourth embodiment. In this example, the amount of ejections of the supporting material SA is doubled, similarly to Fig. 11. As a result, the shaping materials can be shaped to have a height of 30 µm, in total, through only the third and fourth reciprocating scannings, and thus, it is possible to increase the height of the shaping materials resulted from the shapings to be equivalent to that of the shaping in Fig. 9. With this method, as illustrated in Fig. 14B, the model material MA and the supporting material SA are adjacent to each other in a state where they have not been cured, which may make it impossible to completely prevent mixture of the materials. Further, the resolution for the supporting material SA is degraded to 1/2, similarly to Fig. 11.

More specifically, in this embodiment, at first, the model material MA is ejected to have a predetermined first thickness, and thereafter, in a state where the model material MA has not been cured, the roller portion 25 provided in the head portion 20 is caused to scrape off excess portions of the material for smoothing it in at least one forward or rearward path which is different from at least one forward or rearward path in which the model material MA has been ejected, thereby ensuring that the model material MA has a second thickness smaller than the first thickness. Further, the curing device 24 is caused to cure the model material MA having been ejected onto the shaping plate 40, in at least one forward or rearward path which is the same path as that for the smoothing operation of the roller portion 25 or in at least one forward or rearward path after that for the smoothing operation of the roller portion 25. Next, on at least a portion of the surface of the model material MA formed to have the second thickness, actually at proper positions based on slice data, the model material MA is ejected to have a predetermined third thickness, and thereafter, in a state where the model material MA has not been cured, the roller portion 25 provided in the head portion 20 is caused to scrape off excess portions of the material for smoothing it in at least one forward or rearward path which is different from at least one forward or rearward path in which the model material MA has been ejected, thereby ensuring that the model material MA has a fourth thickness smaller than the third thickness. Further, the curing device 24 is caused to cure the model material MA having been ejected onto the shaping plate 40, in at least one forward or rearward path which is the same path as that for the smoothing operation of the roller portion 25 or in at least one forward or rearward path after that for the smoothing operation of the roller portion 25. Thus, at this time point, the model material has, in total, a fifth thickness equal to the sum of the second thickness and the fourth thickness, as a result of the two shapings.

On the other hand, after the processing for curing the surface of the model material MA having the second thickness which has been ejected previously, the supporting material SA is next ejected to have a sixth thickness substantially equal to the sum of the third thickness and the second thickness of the model material, through the same processing as the processing for applying the model material MA to have the third thickness. Thereafter, in a state where the surface of the model material MA having the third thickness and the surface of the supporting material SA having the sixth thickness have not been cured, the roller portion 25 is caused to scrape off excess portions of the material such that the supporting material SA has a seventh thickness substantially equal to the fifth thickness which is the total thickness of the model material MA and is equal to the sum of the second thickness and the fourth thickness, through the processing for smoothing, with the roller portion 25, the model material MA for changing its thickness from the third thickness to the fourth thickness. Further, processing for curing the surface of the supporting material SA having the seventh thickness is performed, through the same processing as the aforementioned processing for curing the surface of the model material MA having the fifth thickness.

### (Sixth Embodiment)

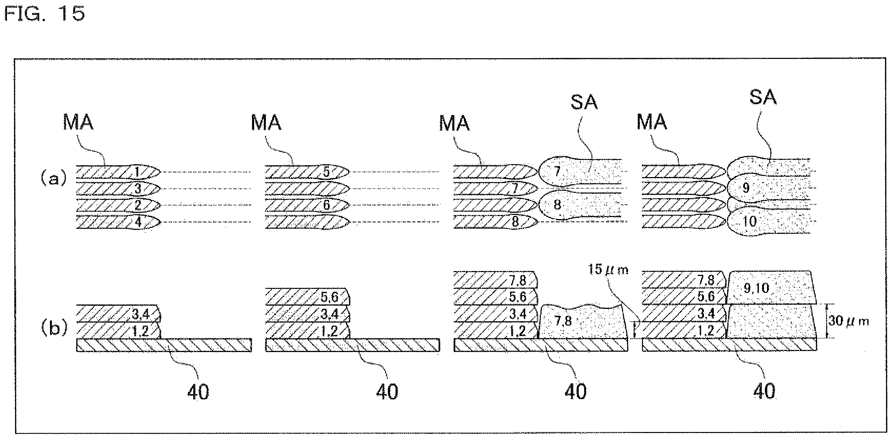

In the aforementioned fifth embodiment, the model material MA and the supporting material SA are adjacent to each other in the height direction, as illustrated in Fig. 14B, which has induced the problem of difficulty of preventing the mixture of the materials at this portion. To cope therewith, there will be described, as a sixth embodiment, an example where the materials are further spaced apart from each other in the height direction, in order to alleviate the mixture thereof, with reference to Fig. 15. In this example, the model material MA is successively ejected and cured through first to fourth reciprocating scannings, which is the same as the example of Fig. 11. In Fig. 15, through a fifth reciprocating scanning, the model material MA is further ejected in the same line as the first-formed line, and through a subsequent sixth reciprocating scanning, the model material MA is further ejected in the same line as the second-formed line. As a result, as illustrated in Fig. 15B, the model material MA has a height of 45 µm, which corresponds to three slices. Further, through a seventh reciprocating scanning, in the forward path, the model material MA is ejected in the same line as the third-formed line, and subsequently, the supporting material SA in a doubled amount is ejected in the same line as the fifth-formed line of the model material MA. At this time, the ejected model material MA in an uncured state has a height of about 60 µm, which corresponds to four slices. Even though the supporting material SA in such a doubled amount is ejected, it only forms a height of 30 µm. This induces a large level difference between the uncured model material MA and the uncured supporting material SA, thereby alleviating the mixture of both the materials at the boundary surface where they are close to each other. Similarly, through an eighth reciprocating scanning, subsequently to ejections of the model material MA, the supporting material SA in a doubled amount is ejected in the same line as the sixth-formed line of the model material MA.

However, during the seventh and eighth reciprocating scannings, the supporting material SA and the model material MA are both cured in the rearward paths, but it is impossible to scrape off excess portions of the supporting material SA with the roller portion 25. This is because the model material MA and the supporting material SA are shaped to have different heights, as illustrated in Fig. 15B. Accordingly, in this case, the roller portion 25 is caused to perform scraping processing only on the model material MA, in conformance to the model material MA. That is, the control device 10 controls the rotation of the roller portion 25, in such a way as to stop the rotation of the roller portion 25, when the roller portion 25 passes over the supporting material SA. Since the supporting material SA will be finally removed, even if the supporting material SA has some degree of roughness on its surface, this will induce no problem in terms of the quality of the shaping material. Further, during subsequent ninth and tenth reciprocating scannings, only the supporting material SA is ejected and cured, and therefore, the roller portion 25 is caused to perform scraping thereon, thereby making the surface even. With this method, regarding the shaping time, while, in Fig. 9, the shaping materials are shaped to have a height of 15 µm through two reciprocating scannings, the shaping materials are shaped, in Fig. 15, to have a height of 60 µm through ten reciprocating scannings, thereby involving a 1.25-times cycle time, and further, degrading the resolution for the supporting material SA to 1/2.

The present embodiment is basically the same as the fourth embodiment, and a series of processes for ejecting, smoothing and curing of the same material are repeated a plurality of times (four times in the embodiment) at first, and then, a series of processes for ejecting, smoothing and curing of the other material are performed through the same processing as last-repeated series of processes, namely, the fourth-repeated series of processes (the layer formed at this time has a height smaller than the height formed by the previously-ejected material, and therefore, the smoothing process cannot be applied thereto). Next, the other material is ejected to ensure that the other material has a height larger than the height formed by the previously-ejected material, and further, the other material is smoothed, thereby ensuring that the other material finally has a height substantially equal to the height formed by the previously-ejected material. Further, the curing device 24 is caused to perform curing processing thereon.

The three-dimensional shaping apparatus and the three-dimensional shaping method according to the present invention can be preferably applied to three-dimensional shaping using laminations of UV curing resins in an ink-jet manner.

## Claims

1. A three-dimensional shaping apparatus for repeatedly performing operations for ejecting, onto a shaping plate (40), a model material (MA) and a supporting material (SA) as shaping materials while performing scanning at least in a single direction, and for curing the materials to form slices having a predetermined thickness in a height direction, and laminating these slices in the height direction for performing shaping, the model material (MA) being to form a final shaped object, and the supporting material (SA) being to support a protruding portion of the model material (MA) and to be finally removed, the three-dimensional shaping apparatus comprising:
the shaping plate (40) for placing a shaped object thereon;
a shaping-material ejection device including a plurality of model-material ejection nozzles (21) for ejecting the model material (MA) and a plurality of supporting-material ejection nozzles (22) for ejecting the supporting material (SA), such that these pluralities of nozzles are arranged in a single direction;
a curing device (24) for curing the model material (MA) and the supporting material (SA);
a head portion (20) including the shaping-material ejection device and the curing device (24);
a horizontal driving device for reciprocatingly scanning the head portion (20) in a horizontal direction;
a vertical driving device for moving positions of the head portion (20) and the shaping plate (40) with respect to each other in the height direction; and
a control device (10) for controlling driving of the horizontal driving device and the vertical driving device and further for controlling the ejections of the shaping materials by the shaping-material ejection device and the curing by the curing device (24); wherein
the control device (10) performs control for causing the horizontal driving device to reciprocatingly scan the head portion (20) in a single direction, further causing the shaping-material ejection device to eject the model material (MA) and the supporting material (SA) onto the shaping plate (40), and causing the curing device (24) to cure the model material (MA) and/or the supporting material (SA) in at least one of forward and rearward paths in the reciprocating scanning to form the slices, further for moving the positions of the shaping plate (40) and the head portion (20) with respect to each other in the height direction, and for repeating the lamination of the slices to perform shaping, **characterised in that**
the supporting material (SA) is ejected in an amount larger than the amount of the model material (MA) which is ejected, and
the supporting material (SA) is shaped with a resolution lower than a resolution for the model material (MA).

2. A three-dimensional shaping apparatus for repeatedly performing operations for ejecting, onto a shaping plate (40), a model material (MA) and a supporting material (SA) as shaping materials while performing scanning at least in a single direction, and for curing the materials to form slices having a predetermined thickness in a height direction, and laminating these slices in the height direction for performing shaping, the model material (MA) being to form a final shaped object, and the supporting material (SA) being to support a protruding portion of the model material (MA) and to be finally removed, the three-dimensional shaping apparatus comprising:
the shaping plate (40) for placing a shaped object thereon;
a shaping-material ejection device including a plurality of model-material ejection nozzles (21) for ejecting the model material (MA) and a plurality of supporting-material ejection nozzles (22) for ejecting the supporting material (SA), such that these pluralities of nozzles are arranged in a single direction;
a curing device (24) for curing the model material (MA) and the supporting material (SA);
a head portion (20) including the shaping-material ejection device and the curing device (24);
a horizontal driving device for reciprocatingly scanning the head portion (20) in a horizontal direction;
a vertical driving device for moving positions of the head portion (20) and the shaping plate (40) with respect to each other in the height direction; and
a control device (10) for controlling driving of the horizontal driving device and the vertical driving device and for controlling the ejections of the shaping materials by the shaping-material ejection device and the curing by the curing device (24); wherein
the control device (10) performs control for causing the horizontal driving device to reciprocatingly scan the head portion (20) in a single direction, further causing the shaping-material ejection device to eject the model material (MA) and the supporting material (SA) onto the shaping plate (40) and causing the curing device (24) to cure the model material (MA) and/or the supporting material (SA) in at least one of forward and rearward paths in the reciprocating scanning to form the slices, further for moving the positions of the shaping plate (40) and the head portion (20) with respect to each other in the height direction, and for repeating the lamination of the slices to perform shaping, **characterised in that**
only the model material (MA) is ejected and cured during a plurality of reciprocating scannings, thereby laminating a plurality of layers made of the cured model material (MA) in the height direction, and thereafter, only the supporting material (SA) is ejected and cured, through a subsequent single reciprocating scanning, to have a height equal to or larger than the height of the plurality of layers made of the model material (MA), thereby forming the single slice.

3. The three-dimensional shaping apparatus according to claim 1 or 2, wherein
the control device (10) is adapted to eject and cure only one of the shaping materials, rather than ejecting the model material (MA) and the supporting material (SA) concurrently through the same reciprocating scannings, in lines in which the model material (MA) and the supporting material (SA) are to be positioned, in a direction of scanning over the shaped object.

4. The three-dimensional shaping apparatus according to any one of claims 1 to 3, further comprising a roller portion (25) for pressing the shaping materials ejected onto the shaping plate (40) in a state where the materials have not been cured, for eliminating an excess portion thereof, wherein
the shaping materials are ejected to have a height equal to or larger than a height of an amount of offset determined based on an accuracy tolerance in the roller portion (25).

5. The three-dimensional shaping apparatus according to any one of claims 1 to 4, further comprising a roller portion (25) for pressing the shaping materials ejected onto the shaping plate (40) in a state where the materials have not been cured.

6. The three-dimensional shaping apparatus according to claim 5, wherein
the roller portion (25) is adapted to be scanned over slices including the model material (MA) which has been cured and the supporting material (SA) which has not been cured, and
the shaping-material ejection device is adapted to perform ejections such that the uncured supporting material (SA) has a height larger than that of the cured model material (MA) by a predetermined amount of offset.

7. The three-dimensional shaping apparatus according to claim 6, wherein
the predetermined amount of offset is determined in consideration of a distribution of positional deviation in the roller portion (25) in the height direction.

8. The three-dimensional shaping apparatus according to claim 6 or 7, wherein
the shaping-material ejection device is adapted to eject the supporting material (SA) which is to be positioned at a lowermost stage, in an amount increased by an amount corresponding to the amount of offset, at respective positions in an XY plane in the slices successively formed on the shaping plate (40).

9. The three-dimensional shaping apparatus according to any one of claims 1 to 8, wherein
the model material (MA) is a photo-curing resin, and
the curing device (24) includes a light emitting device for emitting light.

10. The three-dimensional shaping apparatus according to any one of claims 1 to 9, wherein
the shaping-material ejection device is adapted to eject the model material (MA) and the supporting material (SA), such that the materials are spaced apart from each other.

11. A three-dimensional shaping method for repeatedly performing operations for ejecting, onto a shaping plate (40) for placing a shaped object thereon, a model material (MA) and a supporting material (SA) as shaping materials while performing scanning at least in a single direction, and for curing the materials to form slices having a predetermined thickness in a height direction, and laminating these slices in the height direction for performing shaping, the model material (MA) being to form a final shaped object, and the supporting material (SA) being to support a protruding portion of the model material (MA) and to be finally removed, the three-dimensional shaping method comprising the steps of: ejecting the model material (MA) onto the shaping plate (40) with a shaping-material ejection device for ejecting these shaping materials;
curing the ejected model material (MA) with a curing device (24) for curing the shaping materials;
ejecting the supporting material (SA) onto the shaping plate (40), with the shaping-material ejection device;
curing the other shaping material with the curing device (24); and
moving positions of the shaping plate (40) and the head portion (20) with respect to each other in the height direction, after the formation of the slices from the model material (MA) and the supporting material (SA) having been cured, and then repeating the lamination of the slices, **characterized in that** the supporting material (SA) is ejected in an amount larger than the amount of model material (MA).

12. A three-dimensional shaping program for executing a method according to claim 11, for repeatedly performing operations for ejecting, onto a shaping plate (40) for placing a shaped object thereon, a model material (MA) and a supporting material (SA) as shaping materials while performing scanning at least in a single direction, and for curing the materials to form slices having a predetermined thickness in a height direction, and laminating these slices in the height direction for performing shaping, the model material (MA) being to form a final shaped object, and the supporting material (SA) being to support a protruding portion of the model material (MA) and to be finally removed, the three-dimensional shaping program being adapted to cause a computer to realize the functions of:
ejecting the model material (MA) onto the shaping plate (40) with a shaping-material ejection device for ejecting these shaping materials;
curing the ejected model material (MA) with a curing device (24) for curing the shaping materials;
ejecting the supporting material (SA) in an amount larger than the amount of the model material (MA), onto the shaping plate (40) with the shaping-material ejection device; curing the other shaping material with the curing device (24); and
moving positions of the shaping plate (40) and the head portion (20) with respect to each other in the height direction, after the formation of the slices from the model material (MA) and the supporting material (SA) having been cured, and then repeating the lamination of the slices.

13. A computer-readable recording medium storing the program according to claim 12.

## Patentansprüche

1. Dreidimensionale Formungsvorrichtung zum wiederholten Ausführen von Operationen zum Auswerfen, auf eine Formungsplatte (40), eines Modellmaterials (MA) und eines Stützmaterials (SA) als Formungsmaterialien, während ein Scannen zumindest in einer einzigen Richtung ausgeführt wird, und zum Härten der Materialien, um Scheiben zu bilden, die eine vorgegebene Dicke in einer Höhenrichtung haben, und zum Laminieren dieser Scheiben in der Höhenrichtung zum Ausführen einer Formung, wobei das Modellmaterial (MA) zum Bilden eines endgültig geformten Objektes dient, und wobei das Stützmaterial (SA) zum Stützen eines vorragenden Teils des Modellmaterials (MA) dient und am Ende entfernt werden soll, wobei die dreidimensionale Formungsvorrichtung umfasst:
die Formungsplatte (40) zum Platzieren eines geformten Objektes darauf;
eine Formungsmaterial-Auswurfvorrichtung, die eine Vielzahl von Modellmaterial-Auswurfdüsen (21) zum Auswerfen des Modellmaterials (MA) und eine Vielzahl von Stützmaterial-Auswurfdüsen (22) zum Auswerfen des Stützmaterials (SA) aufweist, sodass diese Vielzahl von Düsen in einer einzigen Richtung angeordnet sind;
eine Härtungsvorrichtung (24) zum Härten des Modellmaterials (MA) und des Stützmaterials (SA);
einen Kopfteil (20), der die Formungsmaterial-Auswurfvorrichtung und die Härtungsvorrichtung (24) aufweist;
eine horizontale Antriebsvorrichtung zum hin- und hergehenden Scannen des Kopfteils (20) in einer horizontalen Richtung;
eine vertikale Antriebsvorrichtung zum Bewegen von Positionen des Kopfteils (20) und der Formungsplatte (40) in Bezug aufeinander in der Höhenrichtung; und
eine Kontrollvorrichtung (10) zum Steuern eines Antriebs der horizontalen Antriebsvorrichtung und der vertikalen Antriebsvorrichtung und weiter zum Steuern der Auswürfe der Formungsmaterialien durch die Formungsmaterial-Auswurfvorrichtung und des Härtens durch die Härtungsvorrichtung (24); wobei
die Kontrollvorrichtung (10) Steuerung ausführt, um zu bewirken, dass die horizontale Antriebsvorrichtung den Kopfteil (20) in einer einzigen Richtung hin- und hergehend scannt, weiter bewirkt, dass die Formungsmaterial-Auswurfvorrichtung das Modellmaterial (MA) und das Stützmaterial (SA) auf die Formungsplatte (40) auswirft, und bewirkt, dass die Härtungsvorrichtung (24) das Modellmaterial (MA) und/oder das Stützmaterial (SA) in mindestens einem der Vorwärts- und Rückwärtspfade beim hin- und hergehenden Scannen härtet, um die Scheiben zu bilden, weiter zum Bewegen der Positionen der Formungsplatte (40) und des Kopfteils (20) in Bezug aufeinander in der Höhenrichtung und zum Wiederholen der Laminierung der Scheiben, um die Formung auszuführen, **dadurch gekennzeichnet, dass**
das Stützmaterial (SA) in einer Menge ausgeworfen wird, die größer als die Menge des Modellmaterials (MA) ist, die ausgeworfen wird, und
das Stützmaterial (SA) mit einer Auflösung geformt wird, die kleiner als eine Auflösung für das Modellmaterial (MA) ist.

2. Dreidimensionale Formungsvorrichtung zum wiederholten Ausführen von Operationen zum Auswerfen, auf eine Formungsplatte (40), eines Modellmaterials (MA) und eines Stützmaterials (SA) als Formungsmaterialien, während ein Scannen zumindest in einer einzigen Richtung ausgeführt wird, und zum Härten der Materialien, um Scheiben zu bilden, die eine vorgegebene Dicke in einer Höhenrichtung haben, und zum Laminieren dieser Scheiben in der Höhenrichtung zum Ausführen einer Formung, wobei das Modellmaterial (MA) zum Bilden eines endgültig geformten Objektes dient, und wobei das Stützmaterial (SA) zum Stützen eines vorragenden Teils des Modellmaterials (MA) dient und am Ende entfernt werden soll, wobei die dreidimensionale Formungsvorrichtung umfasst:
die Formungsplatte (40) zum Platzieren eines geformten Objektes darauf;
eine Formungsmaterial-Auswurfvorrichtung, die eine Vielzahl von Modellmaterial-Auswurfdüsen (21) zum Auswerfen des Modellmaterials (MA) und eine Vielzahl von Stützmaterial-Auswurfdüsen (22) zum Auswerfen des Stützmaterials (SA) aufweist, sodass diese Vielzahl von Düsen in einer einzigen Richtung angeordnet sind;
eine Härtungsvorrichtung (24) zum Härten des Modellmaterials (MA) und des Stützmaterials (SA);
einen Kopfteil (20), der die Formungsmaterial-Auswurfvorrichtung und die Härtungsvorrichtung (24) aufweist;
eine horizontale Antriebsvorrichtung zum hin- und hergehenden Scannen des Kopfteils (20) in einer horizontalen Richtung;
eine vertikale Antriebsvorrichtung zum Bewegen von Positionen des Kopfteils (20) und der Formungsplatte (40) in Bezug aufeinander in der Höhenrichtung; und
eine Kontrollvorrichtung (10) zum Steuern eines Antriebs der horizontalen Antriebsvorrichtung und der vertikalen Antriebsvorrichtung und zum Steuern der Auswürfe der Formungsmaterialien durch die Formungsmaterial-Auswurfvorrichtung und des Härtens durch die Härtungsvorrichtung (24); wobei
die Kontrollvorrichtung (10) Steuerung ausübt, um zu bewirken, dass die horizontale Antriebsvorrichtung den Kopfteil (20) in einer einzigen Richtung hin- und hergehend antreibt, weiter bewirkt, dass die Formungsmaterial-Auswurfvorrichtung das Modellmaterial (MA) und das Stützmaterial (SA) auf die Formungsplatte (40) auswirft, und bewirkt, dass die Härtungsvorrichtung (24) das Modellmaterial (MA) und/oder das Stützmaterial (SA) in mindestens einem der Vorwärts- und Rückwärtspfade beim hin- und hergehenden Scannen härtet, um die Scheiben zu bilden, weiter zum Bewegen der Positionen der Formungsplatte (40) und des Kopfteils (20) in Bezug aufeinander in der Höhenrichtung und zum Wiederholen der Laminierung der Scheiben, um die Formung auszuführen, **dadurch gekennzeichnet, dass**
nur das Modellmaterial (MA) ausgeworfen und gehärtet wird während einer Vielzahl von hin- und hergehenden Scanbewegungen, dadurch Laminieren einer Vielzahl von Schichten, die aus dem gehärteten Modellmaterial (MA) in der Höhenrichtung hergestellt sind, und danach nur das Stützmaterial (SA) ausgeworfen und gehärtet wird, durch eine anschließende einzige hin- und hergehende Scanbewegung, um eine Höhe zu haben, die gleich oder größer der Höhe der Vielzahl von Schichten ist, die aus dem Modellmaterial (MA) hergestellt sind, dadurch Bilden der einzigen Scheibe.

3. Dreidimensionale Formungsvorrichtung nach Anspruch 1 oder 2, wobei
die Kontrollvorrichtung (10) dafür ausgelegt ist, nur eines der Formungsmaterialien auszuwerfen und zu härten, statt das Modellmaterial (MA) und das Stützmaterial (SA) gleichzeitig durch dieselben hin- und hergehenden Scanbewegungen auszuwerfen, in Zeilen, in denen das Modellmaterial (MA) und das Stützmaterial (SA) positioniert werden sollen, in einer Richtung des Scannens über dem geformten Objekt.

4. Dreidimensionale Formungsvorrichtung nach einem der Ansprüche 1 bis 3, weiter umfassend einen Walzenteil (25) zum Pressen der Formungsmaterialien , die auf die Formungsplatte (40) in einem Zustand ausgeworfen wurden, in dem die Materialien noch nicht gehärtet wurden, zum Beseitigen eines Überschussteils derselben, wobei
die Formungsmaterialien so ausgeworfen werden, dass sie eine Höhe haben, die gleich oder größer einer Höhe einer Versatzgröße ist, die auf der Basis einer Genauigkeitstoleranz im Walzenteil (25) bestimmt wird.

5. Dreidimensionale Formungsvorrichtung nach einem der Ansprüche 1 bis 4, weiter umfassend einen Walzenteil (25) zum Pressen der Formungsmaterialien, die auf die Formungsplatte (40) in einem Zustand ausgeworfen wurden, in dem die Materialien noch nicht gehärtet wurden.

6. Dreidimensionale Formungsvorrichtung nach Anspruch 5, wobei
der Walzenteil (25) dafür ausgelegt ist, über Scheiben gescannt zu werden, die das Modellmaterial (MA), welches gehärtet wurde, und das Stützmaterial (SA), welches noch nicht gehärtet wurde, aufweisen, und
die Formungsmaterial-Auswurfvorrichtung dafür ausgelegt ist, Auswürfe derart auszuführen, dass das ungehärtete Stützmaterial (SA) eine Höhe hat, die um eine vorgegebene Versatzgröße größer als die des gehärteten Modellmaterials (MA) ist.

7. Dreidimensionale Formungsvorrichtung nach Anspruch 6, wobei
die vorgegebene Versatzgröße unter Berücksichtigung einer Verteilung der Positionsabweichung im Walzenteil (25) in der Höhenrichtung bestimmt wird.

8. Dreidimensionale Formungsvorrichtung nach Anspruch 6 oder 7, wobei
die Formungsmaterial-Auswurfvorrichtung dafür ausgelegt ist, das Stützmaterial (SA) auszuwerfen, das in einem untersten Abschnitt positioniert werden soll, in einer Menge, die um einen Betrag erhöht wird, der der Menge des Versatzes an jeweiligen Positionen in einer XY-Ebene in den Scheiben entspricht, die nacheinander auf der Formungsplatte (40) gebildet werden.

9. Dreidimensionale Formungsvorrichtung nach einem der Ansprüche 1 bis 8, wobei das Modellmaterial (MA) ein fotohärtendes Harz ist, und
die Härtungsvorrichtung (24) eine lichtemittierende Vorrichtung zum Emittieren von Licht aufweist.

10. Dreidimensionale Formungsvorrichtung nach einem der Ansprüche 1 bis 9, wobei
die Formungsmaterial-Auswurfvorrichtung dafür ausgelegt ist, das Modellmaterial (MA) und das Stützmaterial (SA) derart auszuwerfen, dass die Materialien mit Abstand voneinander angeordnet sind.

11. Dreidimensionales Formungsverfahren für die wiederholte Ausführung von Operationen zum Auswerfen, auf eine Formungsplatte (40) zum Platzieren eines geformten Objektes darauf, eines Modellmaterials (MA) und eines Stützmaterials (SA) als Formungsmaterialien, während ein Scannen zumindest in einer einzigen Richtung ausgeführt wird, und zum Härten der Materialien, um Scheiben zu bilden, die eine vorgegebene Dicke in einer Höhenrichtung haben, und zum Laminieren dieser Scheiben in einer Höhenrichtung zum Ausführen einer Formung, wobei das Modellmaterial (MA) zum Bilden eines endgültig geformten Objektes dient, und wobei das Stützmaterial (SA) zum Stützen eines vorragenden Teils des Modellmaterials (MA) dient und am Ende entfernt werden soll, wobei das dreidimensionale Formungsverfahren die Schritte umfasst:
Auswerfen des Modellmaterials (MA) auf die Formungsplatte (40) mit einer Formungsmaterial-Auswurfvorrichtung zum Auswerfen dieser Formungsmaterialien;
Härten des ausgeworfenen Modellmaterials (MA) mit einer Härtungsvorrichtung (24) zum Härten der Formungsmaterialien;
Auswerfen des Stützmaterials (SA) auf die Formungsplatte (40) mit der Formungsmaterial-Auswurfvorrichtung;
Härten des anderen Formungsmaterials mit der Härtungsvorrichtung (24); und
Bewegen von Positionen der Formungsplatte (40) und des Kopfteils (20) in Bezug aufeinander in der Höhenrichtung, nachdem die Scheiben aus dem Modellmaterial (MA) gebildet wurden und das Stützmaterial (SA) gehärtet worden ist, und dann Wiederholen der Laminierung der Scheiben,
**dadurch gekennzeichnet, dass** das Stützmaterial (SA) in einer Menge ausgeworfen wird, die größer als die Menge des Modellmaterials (MA) ist.

12. Dreidimensionales Formungsprogramm zum Durchführen eines Verfahrens nach Anspruch 11, zum wiederholten Ausführen von Operationen zum Auswerfen, auf eine Formungsplatte (40) zum Platzieren eines geformten Objektes darauf, eines Modellmaterials (MA) und eines Stützmaterials (SA) als Formungsmaterialien, während ein Scannen zumindest in einer einzigen Richtung ausgeführt wird, und zum Härten der Materialien, um Scheiben zu bilden, die eine vorgegebene Dicke in einer Höhenrichtung haben, und zum Laminieren dieser Scheiben in einer Höhenrichtung zum Ausführen einer Formung, wobei das Modellmaterial (MA) zum Bilden eines endgültig geformten Objektes dient, und wobei das Stützmaterial (SA) zum Stützen eines vorragenden Teils des Modellmaterials (MA) dient und am Ende entfernt werden soll, wobei das dreidimensionale Formungsprogramm dafür ausgelegt ist, den Computer zu veranlassen, die Funktionen zu realisieren:
Auswerfen des Modellmaterials (MA) auf die Formungsplatte (40) mit einer Formungsmaterial-Auswurfvorrichtung zum Auswerfen dieser Formungsmaterialien;
Härten des ausgeworfenen Modellmaterials (MA) mit einer Härtungsvorrichtung (24) zum Härten der Formungsmaterialien;
Auswerfen des Stützmaterials (SA) in einer Menge, die größer als die Menge des Modellmaterials (MA) ist, auf die Formungsplatte (40) mit einer Formungsmaterial-Auswurfvorrichtung;
Härten des anderen Formungsmaterials mit der Härtungsvorrichtung (24); und
Bewegen von Positionen der Formungsplatte (40) und des Kopfteils (20) in Bezug aufeinander in der Höhenrichtung, nachdem die Scheiben aus dem Modellmaterial (MA) gebildet wurden und das Stützmaterial (SA) gehärtet worden ist, und dann Wiederholen der Laminierung der Scheiben.

13. Computerlesbares Speichermedium, das das Programm nach Anspruch 12 speichert.

## Revendications

1. Appareil de formage tridimensionnel pour la réalisation répétée d'opérations pour éjecter, sur une plaque de formage (40), un matériau de modélisation (MA) et un matériau de support (SA) en tant que matériaux de formage tout en réalisant un balayage au moins dans une direction unique, et pour durcir les matériaux pour former des tranches ayant une épaisseur prédéterminée dans une direction de la hauteur, et stratifier ces tranches dans la direction de la hauteur pour réaliser le formage, le matériau de modélisation (MA) étant pour former un objet formé final, et le matériau de support (SA) étant pour supporter une partie en saillie du matériau de modélisation (MA) et pour être finalement retiré, l'appareil de formage tridimensionnel comprenant :
la plaque de formage (40) pour placer un objet formé sur celle-ci ;
un dispositif d'éjection de matériau de formage incluant une pluralité de buses d'éjection de matériau de modélisation (21) pour éjecter le matériau de modélisation (MA) et une pluralité de buses d'éjection de matériau de support (22) pour éjecter le matériau de support (SA), de sorte que ces pluralités de buses sont agencées dans une direction unique ;
un dispositif de durcissement (24) pour durcir le matériau de modélisation (MA) et le matériau de support (SA) ;
une partie formant tête (20) incluant le dispositif d'éjection de matériau de formage et le dispositif de durcissement (24) ;
un dispositif d'entraînement horizontal pour balayer en va-et-vient la partie formant tête (20) dans une direction horizontale ;
un dispositif d'entraînement vertical pour déplacer des positions de la partie formant tête (20) et de la plaque de formage (40) l'une par rapport à l'autre dans la direction de la hauteur ; et
un dispositif de commande (10) pour commander l'entraînement du dispositif d'entraînement horizontal et du dispositif d'entraînement vertical et en outre pour commander les éjections des matériaux de formage par le dispositif d'éjection de matériau de formage et le durcissement par le dispositif de durcissement (24) ; dans lequel
le dispositif de commande (10) réalise la commande pour provoquer le balayage en va-et-vient par le dispositif d'entraînement horizontal de la partie formant tête (20) dans une direction unique, pour provoquer en outre l'éjection par le dispositif d'éjection de matériau de formage du matériau de modélisation (MA) et du matériau de support (SA) sur la plaque de formage (40), et pour provoquer le durcissement par le dispositif de durcissement (24) du matériau de modélisation (MA) et/ou du matériau de support (SA) dans au moins l'un des trajets vers l'avant et vers l'arrière dans le balayage en va-et-vient pour former les tranches, en outre pour déplacer les positions de la plaque de formage (40) et de la partie formant tête (20) l'une par rapport à l'autre dans la direction de la hauteur, et pour répéter la stratification des tranches pour réaliser le formage, **caractérisé en ce que**
le matériau de support (SA) est éjecté dans une quantité supérieure à la quantité du matériau de modélisation (MA) qui est éjectée, et
le matériau de support (SA) est formé avec une résolution inférieure à une résolution pour le matériau de modélisation (MA).

2. Appareil de formage tridimensionnel pour la réalisation répétée d'opérations pour éjecter, sur une plaque de formage (40), un matériau de modélisation (MA) et un matériau de support (SA) en tant que matériaux de formage tout en réalisant un balayage au moins dans une direction unique, et pour durcir les matériaux pour former des tranches ayant une épaisseur prédéterminée dans une direction de la hauteur, et stratifier ces tranches dans la direction de la hauteur pour réaliser le formage, le matériau de modélisation (MA) étant pour former un objet formé final, et le matériau de support (SA) étant pour supporter une partie en saillie du matériau de modélisation (MA) et pour être finalement retiré, l'appareil de formage tridimensionnel comprenant :
la plaque de formage (40) pour placer un objet formé sur celle-ci ;
un dispositif d'éjection de matériau de formage incluant une pluralité de buses d'éjection de matériau de modélisation (21) pour éjecter le matériau de modélisation (MA) et une pluralité de buses d'éjection de matériau de support (22) pour éjecter le matériau de support (SA), de sorte que ces pluralités de buses sont agencées dans une direction unique ;
un dispositif de durcissement (24) pour durcir le matériau de modélisation (MA) et le matériau de support (SA) ;
une partie formant tête (20) incluant le dispositif d'éjection de matériau de formage et le dispositif de durcissement (24) ;
un dispositif d'entraînement horizontal pour balayer en va-et-vient la partie formant tête (20) dans une direction horizontale ;
un dispositif d'entraînement vertical pour déplacer des positions de la partie formant tête (20) et de la plaque de formage (40) l'une par rapport à l'autre dans la direction de la hauteur ; et
un dispositif de commande (10) pour commander l'entraînement du dispositif d'entraînement horizontal et du dispositif d'entraînement vertical et pour commander les éjections des matériaux de formage par le dispositif d'éjection de matériau de formage et le durcissement par le dispositif de durcissement (24) ; dans lequel
le dispositif de commande (10) réalise une commande pour provoquer le balayage en va-et-vient par le dispositif d'entraînement horizontal de la partie formant tête (20) dans une direction unique, pour provoquer en outre l'éjection par le dispositif d'éjection de matériau de formage du matériau de modélisation (MA) et du matériau de support (SA) sur la plaque de formage (40) et pour provoquer le durcissement par le dispositif de durcissement (24) du matériau de modélisation (MA) et/ou du matériau de support (SA) dans au moins l'un des trajets vers l'avant et vers l'arrière dans le balayage en va-et-vient pour former les tranches, en outre pour déplacer les positions de la plaque de formage (40) et de la partie formant tête (20) l'une par rapport à l'autre dans la direction de la hauteur, et pour répéter la stratification des tranches pour réaliser le formage, **caractérisé en ce que**
seul le matériau de modélisation (MA) est éjecté et durci pendant une pluralité de balayages en va-et-vient, stratifiant ainsi une pluralité de couches constituées du matériau de modélisation (MA) durci dans la direction de la hauteur, et ensuite, seul le matériau de support (SA) est éjecté et durci, au moyen d'un balayage en va-et-vient unique suivant, pour avoir une hauteur égale ou supérieure à la hauteur de la pluralité de couches constituées du matériau de modélisation (MA), formant ainsi la couche unique.

3. Appareil de formage tridimensionnel selon la revendication 1 ou 2, dans lequel
le dispositif de commande (10) est conçu pour éjecter et durcir uniquement l'un des matériaux de formage, plutôt qu'éjecter le matériau de modélisation (MA) et le matériau de support (SA) simultanément au moyen des mêmes balayages en va-et-vient, dans des lignes dans lesquelles le matériau de modélisation (MA) et le matériau de support (SA) doivent être positionnés, dans une direction de balayage sur l'objet formé.

4. Appareil de formage tridimensionnel selon l'une quelconque des revendications 1 à 3, comprenant en outre une partie formant rouleau (25) pour presser les matériaux de formage éjectés sur la plaque de formage (40) dans un état où les matériaux n'ont pas été durcis, pour éliminer une partie en excès de ceux-ci, dans lequel
les matériaux de formage sont éjectés pour avoir une hauteur égale ou supérieure à une hauteur d'une quantité de décalage déterminée sur la base d'une tolérance de précision dans la partie formant rouleau (25).

5. Appareil de formage tridimensionnel selon l'une quelconque des revendications 1 à 4, comprenant en outre une partie formant rouleau (25) pour presser les matériaux de formage éjectés sur la plaque de formage (40) dans un état où les matériaux n'ont pas été durcis.

6. Appareil de formage tridimensionnel selon la revendication 5, dans lequel
la partie formant rouleau (25) est conçue pour être balayée sur des tranches incluant le matériau de modélisation (MA) qui a été durci et le matériau de support (SA) qui n'a pas été durci, et
le dispositif d'éjection de matériau de formage est conçu pour réaliser des éjections de sorte que le matériau de support (SA) non durci a une hauteur supérieure à celle du matériau de modélisation (MA) durci d'une quantité de décalage prédéterminée.

7. Appareil de formage tridimensionnel selon la revendication 6, dans lequel
la quantité de décalage prédéterminée est déterminée en tenant compte d'une distribution d'écart de position dans la partie formant rouleau (25) dans la direction de la hauteur.

8. Appareil de formage tridimensionnel selon la revendication 6 ou 7, dans lequel
le dispositif d'éjection de matériau de formage est conçu pour éjecter le matériau de support (SA) qui doit être positionné à un niveau le plus bas, dans une quantité augmentée d'une quantité correspondant à la quantité de décalage, à des positions respectives dans un plan XY dans les tranches formées successivement sur la plaque de formage (40).

9. Appareil de formage tridimensionnel selon l'une quelconque des revendications 1 à 8, dans lequel
le matériau de modélisation (MA) est une résine photodurcissable, et
le dispositif de durcissement (24) inclut un dispositif électroluminescent pour émettre de la lumière.

10. Appareil de formage tridimensionnel selon l'une quelconque des revendications 1 à 9, dans lequel
le dispositif d'éjection de matériau de formage est conçu pour éjecter le matériau de modélisation (MA) et le matériau de support (SA), de sorte que les matériaux sont espacés l'un de l'autre.

11. Procédé de formage tridimensionnel pour la réalisation répétée d'opérations pour éjecter, sur une plaque de formage (40) pour placer un objet formé sur celle-ci, un matériau de modélisation (MA) et un matériau de support (SA) en tant que matériaux de formage tout en réalisant un balayage au moins dans une direction unique, et pour durcir les matériaux pour former des tranches ayant une épaisseur prédéterminée dans une direction de la hauteur, et stratifier ces tranches dans la direction de la hauteur pour réaliser le formage, le matériau de modélisation (MA) étant pour former un objet formé final, et le matériau de support (SA) étant pour supporter une partie en saillie du matériau de modélisation (MA) et pour être finalement retiré, le procédé de formage tridimensionnel comprenant les étapes de :
éjection du matériau de modélisation (MA) sur la plaque de formage (40) avec un dispositif d'éjection de matériau de formage pour éjecter ces matériaux de formage ;
durcissement du matériau de modélisation (MA) éjecté avec un dispositif de durcissement (24) pour durcir les matériaux de formage ;
éjection du matériau de support (SA) sur la plaque de formage (40), avec le dispositif d'éjection de matériau de formage ;
durcissement de l'autre matériau de formage avec le dispositif de durcissement (24) ; et
déplacement de positions de la plaque de formage (40) et de la partie formant tête (20) l'une par rapport à l'autre dans la direction de la hauteur, après la formation des tranches à partir du matériau de modélisation (MA) et du matériau de support (SA) ayant été durcis, puis répétition de la stratification des tranches,
**caractérisé en ce que** le matériau de support (SA) est éjecté dans une quantité supérieure à la quantité de matériau de modélisation (MA).

12. Programme de formage tridimensionnel pour exécuter un procédé selon la revendication 11, pour la réalisation répétée d'opérations pour éjecter, sur une plaque de formage (40) pour placer un objet formé sur celle-ci, un matériau de modélisation (MA) et un matériau de support (SA) en tant que matériaux de formage tout en réalisant un balayage au moins dans une direction unique, et pour durcir les matériaux pour former des tranches ayant une épaisseur prédéterminée dans une direction de la hauteur, et stratifier ces tranches dans la direction de la hauteur pour réaliser le formage, le matériau de modélisation (MA) étant pour former un objet formé final, et le matériau de support (SA) étant pour supporter une partie en saillie du matériau de modélisation (MA) et pour être finalement retiré, le programme de formage tridimensionnel étant conçu pour faire réaliser à un ordinateur les fonctions de :
éjection du matériau de modélisation (MA) sur la plaque de formage (40) avec un dispositif d'éjection de matériau de formage pour éjecter ces matériaux de formage ;
durcissement du matériau de modélisation (MA) éjecté avec un dispositif de durcissement (24) pour durcir les matériaux de formage ;
éjection du matériau de support (SA) dans une quantité plus importante que la quantité de matériau de modélisation (MA), sur la plaque de formage (40) avec le dispositif d'éjection de matériau de formage ;
durcissement de l'autre matériau de formage avec le dispositif de durcissement (24) ; et
déplacement de positions de la plaque de formage (40) et de la partie formant tête (20) l'une par rapport à l'autre dans la direction de la hauteur, après la formation des tranches à partir du matériau de modélisation (MA) et du matériau de support (SA) ayant été durcis, puis répétition de la stratification des tranches.

13. Support d'enregistrement lisible par ordinateur stockant le programme selon la revendication 12.
